# EUROPEAN PATENT APPLICATION

(11) **EP 1 463 221 A1**
(43) Date of publication of application: **29.09.2004**
(21) Application number: 02783672.5
(22) Date of filing: 28.11.2002
(51) Int. Cl.: H04J 1/00, H04L 27/34

(54) **MODULATION/DEMODULATION APPARATUS USING MATRIX AND ANTI-MATRIX**

(30) Priority: 30.11.2001 JP 2001367226
(71) Applicant: Matsunaga, Hayami, Hirakata-shi, Osaka 573-0083 (JP)
(72) Inventor: Matsunaga, Hayami, Hirakata-shi, Osaka 573-0083 (JP)
(74) Representative: Grünecker, Kinkeldey, Stockmair & Schwanhäusser Anwaltssozietät
(86) International application number: PCT/JP2002/012460
(87) International publication number: WO 2003/047133

(57) **Abstract**

When a narrow-band digital filter is used for demodulating a signal which has been modulated by using a plenty of sub-carriers, the number of stages is increased, analysis requires a long time, the transmission speed is not increased, and the circuit size is increased. The modulation circuit operation is considered as multiplication of a trigonometric function matrix of each sub-carrier by modulation data matrix and DA conversion of the product. The state of each sampling is expressed by a simultaneous linear equation. For demodulation of this, the simultaneous equation is solved by handling the AD conversion data as a modulation output and the modulation data series as unknown, so as to obtain the demodulation data series. Thus, it is possible to obtain demodulation data series by a comparatively small number of sub-carriers and a small number of samplings. In order to increase the transmission speed and reduce the circuit size, the speed increase of the DA/AD converter the phase amplitude is corrected by applying to the number of over-samplings, thereby improving the transmission reliability.

## Description

### [detailed description of invention]

### [ engineering field of this invention]

This invention use the carrier of which reflection is not so strong, and is applied to the modulation and demodulation apparatus using quadrature magnitude modulation of many number of sub-carrier and transmit the digital data from each other.

### [conventional engineering]

Such method as transmitting the data using many number of sub-carriers which are modulated by quadrature magnitude modulation is applied to QAM of digital cable TV or to DSL of metal twist-pair and so on. These method concentrate on the frequency of each carriers and demodulate the signal by applying digital filter or FFT using impulse response result as coefficient of filter. For this reason it takes comparatively long time to detect the amplitude of a carrier because of looking until it seems as same continuous wave form.

### [target to solve by this invention ]

To detect accurate result from modulated signal, demodulation circuit such as digital filter or FFT concentrate on frequency of each sub-carrier independently and increase the number of wave form to make difficulty of transmission speed. To make transmission speed high, for example, is to increase the number of carriers and reach so high frequency as to decrease transmission distance greatly.

### [method to solve these difficulty by this invention ]

By this invention, demodulation circuit do not concentrate on frequency of each sub-carrier independently but pay attention the modulated data consisted by the amount of quadrature amplitude modulation of each sub-carriers, and this construction is seemed to be simultaneous linear equation defining amplitude of each sub-carriers as unknown, so can get the result of amplitude of each sub-carrier by solving this simultaneous linear equation. As simultaneous linear equation can be solved in case of the number of unknown equal to the number of each equation, ideally so as to be able to exchange the number of data by equal number of modulated data. This invention is aimed to build the circuit method by taking the simultaneous linear equation and solving in modulation and demodulation circuit. To take amount of quadrature modulation of many sub-carriers is described using matrix mathematics as following.

This matrix is square and is constructed equal number of line and column which is two times number of sub-carrier frequency and mean sine wave and cosine wave using one frequency. The elements of this matrix called as modulation matrix are value of trigonometric function, and line means number of sampling of which interval is equal to DA converter frequency, and column means sub-carrier which is sine or cosine of a carrier frequency. The product of this modulation matrix and modulation data matrix of one column responding each sub-carrier is named as the modulated data matrix and is converted by DA converter to analog output respectively. As the lines of modulation matrix are arranged according to DA converting number and is the sine or cosine value of carrier frequency, the product of this modulation matrix and one column modulation data matrix means sum of product of the sine or cosine value at every line and modulation data specified to the sub-carrier, and become modulated data for DA converter input of its every interval. These show that quadrature modulation is described as the simultaneous linear equation.

From the view of demodulation side about this equation, it seams for modulated data to be the received data detected by AD converter, and modulation data as unknown. As there are modulation data as unknown of two times number kinds of carrier frequency, so there are equations of two times number of carrier frequency. Therefore this simultaneous linear equation can be solved. At demodulation side, the sampling frequency of AD converter is adjusted to the sampling frequency of DA converter of modulation side, and similar data as modulated data is got from AD converter, and demodulated data is got as the product of received data matrix from AD converter and inverse matrix of modulation matrix called demodulation matrix. And more, over-sampling is implemented to this concept, the numbers of over-sampling modulation matrix are created, and the numbers of demodulation matrix, which are the inverse matrix of modulation matrix, become as the numbers of over-sampling. And the over-sampling modulation matrix is composed by inserting each line in over-sampling order position, and the over-sampling demodulation matrix is composed by similar method of insertion. When modulation uses this over-sampling modulation matrix and demodulation uses this over-sampling demodulation matrix, then over-sampling number times demodulated data is got. When modulation uses this over-sampling modulation matrix and demodulation uses individual inverse matrices, then the same numbers of over-sampling demodulated data are got.
In following, these theory is described by using mathematical equation. About the modulation matrix which is the base of this theory,
Line number : *i* *i* = 1∼2 α*n*
Column number : *j* *j* = 1∼2*n*

### About above definition

Number of carrier frequency : *n*
Number of over-sampling : α

### According to these definition

Carrier frequency number : *p* *p* = 0∼(*n*-1)
Original sampling order (without over-sampling) : *q* *q*=0∼(2n-1)
Order of over-sampling :*r* *r* = 1 ∼ α
Kind of wave : *s* *s* = 1 indicate cosine wave *s* = 2 indicate sine wave About relation of these parameter to line number *i* and column number *j*$\text{i} \text{= α} \text{q} \text{+} \text{r} \text{q} \text{= 0∼(2} \text{n} \text{- 1)} \text{r} \text{= 1 ∼ α therefore} \text{i} \text{= 1 ∼ 2 α} \text{n}$$\text{j} \text{= 2} \text{p} \text{+} \text{s} \text{p} \text{= 0∼(} \text{n} \text{- 1)} \text{s} \text{= 1 or 2 therefore} \text{j} \text{= 1 ∼ 2} \text{n}$ the element of line number *i* and column number j is *Fj* (*i*) and is defined as${\text{F}}_{\text{j}} \text{(} \text{i} \text{) =} {\text{F}}_{\text{2p}} {\text{}}_{\text{+}} {\text{}}_{\text{s}} \text{(α q + r)}$
Frequency of frequency number *p* : *fp*
Angle velocity of frequency number *p* : ω *p*
Number of original sampling in one complete wave form: ρ interval time of over-sampling : *T*_{*s*}${\text{ω}}_{\text{p}} \text{= 2π} {\text{f}}_{\text{p}}$${\text{T}}_{\text{s}} \text{=} \frac{\text{1}}{\text{ρ×α×} {\text{f}}_{\text{0}}}$ and, the angle of sine and cosine in the element of line number *i*${\text{ω}}_{\text{p}} \text{×} {\text{T}}_{\text{s}} \text{×} \text{i} \text{=} \frac{\text{2π} {\text{f}}_{\text{p}}}{\text{ρ × α ×} {\text{f}}_{\text{0}}} \text{× (} \text{aq} \text{+} \text{r} \text{)}$

Therefore, the element of modulation matrix *F*_{*j*}(*i*) is described following.

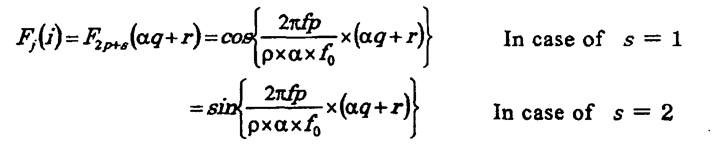

The size of modulation matrix is 2α*n* lines and 2n columns.

The size of modulation data matrix is 2n lines and one column, and of which element is described as *x*_{*j*} because the line number of modulation data matrix is related to the column number of modulation matrix for the reason of relating each modulation data to the sub-carrier of sine and cosine individually. Equation of quadrature modulation is described as the product of the modulation matrix and modulation data matrix. The size of modulated data matrix, which is the product of the modulation matrix and modulation data matrix, is 2α*n* lines and one column, and the element of modulated data matrix is described as *d*_{*i*} according to line number of modulation matrix. As the element of modulated data matrix *d*_{*i*} is the amount of quadrature modulation of each sub-carrier at every sampling time, the equation of modulation is described by matrix as following$\text{(} {\text{F}}_{\text{j}} \text{(} \text{i} \text{)) × (} {\text{x}}_{\text{j}} \text{)=(} {\text{d}}_{\text{i}} \text{)}$ and this equation is described by elements as following

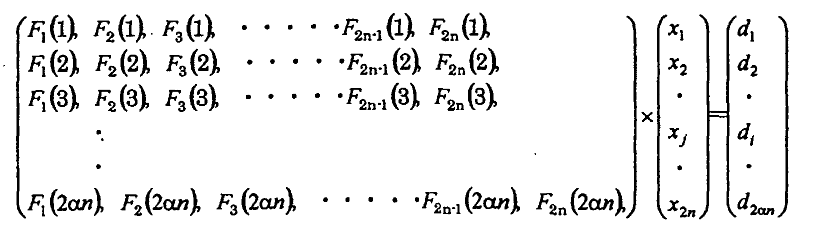

And this equation is described by simultaneous linear equation is as following

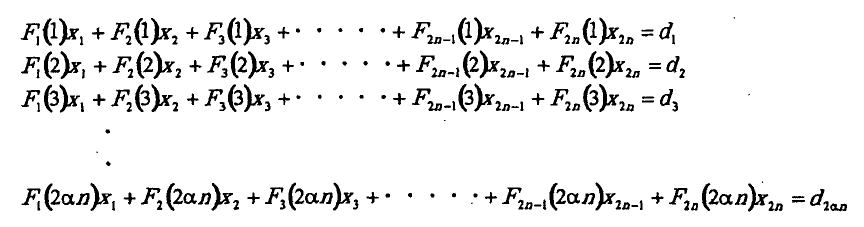

Depend on this simultaneous linear equation, the product of initially determined *F*_{*j*}(*i*) and modulation data *x*_{*j*} related by *j*, summed together through all *j* resulting to *d*_{*j*} as the input data of DA converter at sampling number *i*, and is converted to analog output. *d*_{*j*} can be got by multiplying and accumulating in every sampling interval.

Following is described about the treatment in receiving side. The matrix of which elements *F*_{*r*}_{0,}_{*j*}(*g*) is picked up from modulation matrix by implementing the over-sampling order number *r* = *r*₀, then is represented as following.

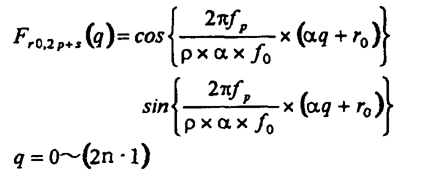

The first line of this matrix is first *r*₀ line of modulation matrix, and the other line is picked up from modulation matrix every α line from *r*₀ to constructing 2*n* lines.

The first line of related modulated data matrix is first *r*₀ line of modulated data matrix and the other line is picked up from modulated data matrix every α line from *r*₀ to constructing 2*n* lines, and of which element is described as *d*_{*r*}_{0,}_{*q*} as following.${\text{d}}_{\text{r}} {\text{}}_{\text{0,}} {\text{}}_{\text{q}} \text{=} \text{d} \text{(α} \text{q} \text{≠} {\text{r}}_{\text{0}} \text{)}$

The modulation equation of above matrix picking up by sampling order *r*₀ is described by matrix as following 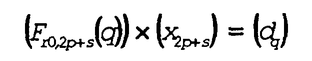 and this equation is described by elements as following

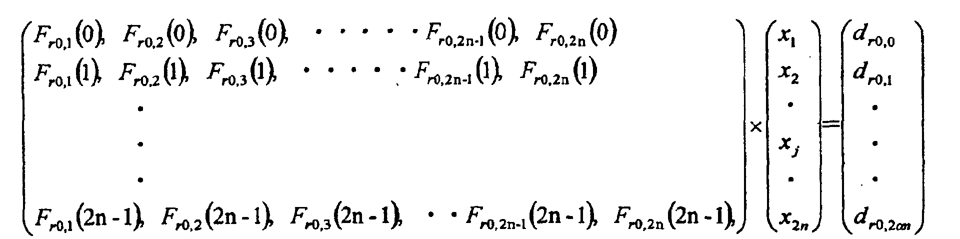

And this equation is described by simultaneous linear equation as following

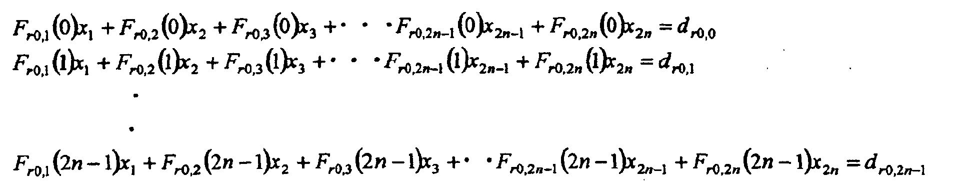

In this simultaneous linear equation, *d*_{*r*}_{0,0}∼*d*_{*r*}_{0,2}_{*n*}₋₁ are similarly got as receiving data by AD converter. For the demodulation side to detect the modulation data *x*₁∼*x*₂_{*n*}, the inverse matrix of the modulation matrix of which element is (*F*_{*r*}_{0,2}_{*p*}₊_{*s*})is applied to solving this simultaneous linear equation. The element of inverse matrix of modulation matrix is described as *G*_{*r*}_{0,}_{*j*}(*q*)

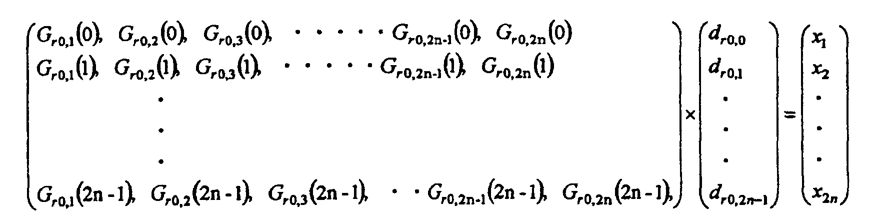

And this equation is described by simultaneous linear equation as following

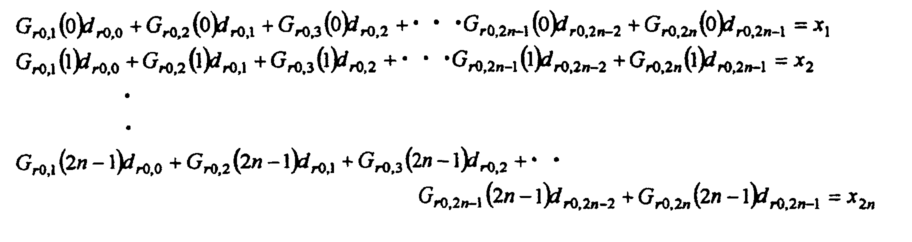

According to this simultaneous linear equation, the inverse matrix of the matrix which is picked up the same over-sampling number line from the over-sampling modulation matrix, and the receiving data coming from AD converter at every r₀ sampling interval, are multiplied and summed together by two times number of carrier frequency accumulators, continuously until the end of one frame of modulation, and then the demodulated data of all sub-carriers are got.

Mathematically, the size of receiving data matrix is one column matrix, and about the construction of inverse matrix, the line number is relating to column number of modulation matrix, and the column number is relating to line number of modulation matrix and it look like exchange the line and column.

As the number of over-sampling is α, the number of α inverse matrix are created from modulation matrix and are got the number of a kind of demodulated data by this operation. When demodulation starts from the first line of demodulation matrix synchronizing to the receiving data of the first line of modulation matrix, α kind of demodulated data are equal one after another because of only one kind of modulation data. When demodulation starts from several sampling later than the first line of demodulation matrix but not over a sampling, the number of same demodulation data decrease according to the number of several sampling delay. When demodulation starts from over α sampling after the first line of demodulation matrix, no same demodulation data is got because the one frame time belonging to the one operation of demodulation matrix spread two frame time belonging to first modulated data matrix and of next modulated data matrix and the receiving data are constructed by first modulation data and next modulation data. This property is applied to synchronization of modulation and demodulation. The matrix, of which column is picked up from one column of demodulation matrix and is constructed other column by shifting one over-sampling interval from each other to the end of the line number of demodulation matrix, is created, and demodulation operation is applied to any receiving data from AD converter by this shifted matrix, and synchronize point is found by the columns number of same demodulated data.

The meaning of demodulation, which use the matrix composed the lines from over-sampling number of inverse matrix placed at over-sampling proper timing under the condition of synchronizing with modulation, is that there are over-sampling number of simultaneous linear equation, and over-sampling number of same modulated data are solved. The products of over-sampling demodulation matrix and receiving data matrix from AD converter are summed together, and over-sampling number times of similar modulated data are got, and this contribute the reduction of electrical circuits of multiplier and accumulator.

[ 0005 Next explaining the adjusting method in following The distortion, which is created by the parameter of line such as twist-pair between terminals, which is created by sampling timing difference between DA converter and AD converter, should be adjusted to get the correct demodulated data. Before the practical communication under the circumstance of decided parameter of line or DA or AD converter, test communication is done to get the parameter of adjustment. Modulation data of sub-carrier frequency number *p* are *x*₂_{*p*}₊₁ for cosine and *x*₂_{*p*}₊₂ for sine and the phase of these wave is shifted *θ*_{*p*} in the receiving data by the parameter of communication line or sampling timing difference of DA and AD converter.

The phase shifted form of the wave described as following.${\text{x}}_{\text{2}} {\text{}}_{\text{p}} {\text{}}_{\text{+1}} \text{cos} {\text{(ω}}_{\text{p}} \text{t} {\text{+ θ}}_{\text{p}} \text{)=} {\text{x}}_{\text{2}} {\text{}}_{\text{p}} {\text{}}_{\text{+1}} \text{cos} {\text{θ}}_{\text{p}} \text{cos} {\text{ω}}_{\text{p}} \text{t} \text{-} {\text{x}}_{\text{2}} {\text{}}_{\text{p}} {\text{}}_{\text{+1}} \text{sin} {\text{θ}}_{\text{p}} \text{sin} {\text{ω}}_{\text{p}} \text{t}$${\text{x}}_{\text{2}} {\text{}}_{\text{p}} {\text{}}_{\text{+2}} \text{sin} {\text{(ω}}_{\text{p}} \text{t} {\text{+ θ}}_{\text{p}} \text{)=} {\text{x}}_{\text{2}} {\text{}}_{\text{p}} {\text{}}_{\text{+2}} \text{cos} {\text{θ}}_{\text{p}} \text{sin} {\text{ω}}_{\text{p}} \text{t} \text{+} {\text{x}}_{\text{2}} {\text{}}_{\text{p}} {\text{}}_{\text{+2}} \text{sin} {\text{θ}}_{\text{p}} \text{cos} {\text{ω}}_{\text{p}} \text{t}$

In demodulation side, the amount of these wave is got as the receiving data, and practical demodulated data β₂_{*p*}₊₁ for cosine and β₂_{*p*}₊₂ for sine, which is demodulated by the operation of receiving data and demodulation matrix about cosine and sine independently, are got as coefficient of cosω_{*p*}*t* and sinω_{*p*}*t*. And practical demodulated data is described mathematically as following.${\text{β}}_{\text{2}} {\text{}}_{\text{p}} {\text{}}_{\text{+1}} \text{=} {\text{x}}_{\text{2}} {\text{}}_{\text{p}} {\text{}}_{\text{+1}} \text{cos} {\text{θ}}_{\text{p}} \text{+} {\text{x}}_{\text{2}} {\text{}}_{\text{p}} {\text{}}_{\text{+2}} \text{sin} {\text{θ}}_{\text{p}}$${\text{β}}_{\text{2}} {\text{}}_{\text{p}} {\text{}}_{\text{+2}} {\text{= -x}}_{\text{2}} {\text{}}_{\text{p}} {\text{}}_{\text{+1}} {\text{sinθ}}_{\text{p}} \text{+} {\text{x}}_{\text{2}} {\text{}}_{\text{p}} {\text{}}_{\text{+2}} {\text{cosθ}}_{\text{p}}$

Practical demodulated data of each sampling index r are described as β_{*r*}_{,2}_{*p*}₊₁ and β_{*r*}_{,2}_{*p*}₊₂, which is detected by the operation of partial demodulation matrix and partial receiving data matrix of each sampling index. This demodulated data are described by use of raff equal symbol because of being distorted by noise and phase shift. And equation is described as following.${\text{β}}_{\text{r}} {\text{}}_{\text{,2}} {\text{}}_{\text{p}} {\text{}}_{\text{+1}} \text{≅} {\text{x}}_{\text{2}} {\text{}}_{\text{p}} {\text{}}_{\text{+1}} {\text{cosθ}}_{\text{p}} \text{+} {\text{x}}_{\text{2}} {\text{}}_{\text{p}} {\text{}}_{\text{+2}} {\text{sin θ}}_{\text{p}}$${\text{β}}_{\text{r}} {\text{}}_{\text{,2}} {\text{}}_{\text{p}} {\text{}}_{\text{+2}} \text{≅ -} {\text{x}}_{\text{2}} {\text{}}_{\text{p}} {\text{}}_{\text{+1}} {\text{sin θ}}_{\text{p}} \text{+} {\text{x}}_{\text{2}} {\text{}}_{\text{p}} {\text{}}_{\text{+2}} {\text{cosθ}}_{\text{p}}$

Difference is took in spite of raff equal symbol, and amount of square of these difference is described as δ_{*p*}² and is differentiated by θ_{*p*} to apply minimum square method.

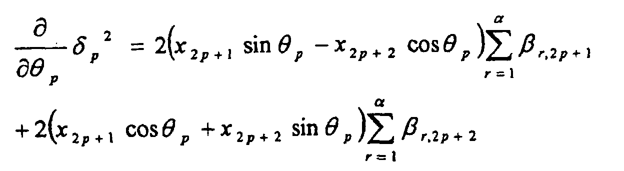

The modulation data of the test communication before practical communication is described following${\text{x}}_{\text{2}} {\text{}}_{\text{p}} {\text{}}_{\text{+1}} \text{=} {\text{x}}_{\text{2}} {\text{}}_{\text{p}} {\text{}}_{\text{+2}} \text{=} {\text{x}}_{\text{test}} \text{≠ 0}$

To get θ_{*p*} by applying minimum square method$\frac{\text{∂}}{{\text{∂θ}}_{\text{p}}} {\text{δ}}_{\text{p}} {}^{\text{2}} \text{= 0}$ and get the result for θ_{*p*} in following

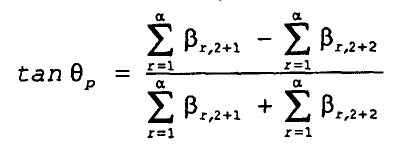

And cosθ_{*p*} or sinθ_{*p*} is calculated by tanθ_{*p*}.

As modulation data is determined as the mean value of over-sampling number of practical demodulation data, so is described following

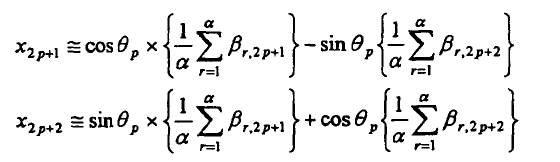

The modulation data *x*_{*test*} before the practical communication is already known at receiving side and described as following.

In the column number 2p + 1${\text{x}}_{\text{test}} \text{≅} \text{cos} {\text{θ}}_{\text{p}} \text{×} {\overline{\text{D}}}_{\text{2} \text{p} \text{+1}} \text{(} \text{test} \text{)-} \text{sin} {\text{θ}}_{\text{p}} \text{×} {\overline{\text{D}}}_{\text{2} \text{p} \text{+2}} \text{(} \text{test} \text{)}$

In the column number 2*p* + 2${\text{x}}_{\text{test}} \text{≅} \text{sin} {\text{θ}}_{\text{p}} \text{×} {\overline{\text{D}}}_{\text{2} \text{p} \text{+1}} \text{(} \text{test} \text{)+} \text{cos} {\text{θ}}_{\text{p}} \text{×} {\overline{\text{D}}}_{\text{2} \text{p} \text{+2}} \text{(} \text{test} \text{)}$

In these equation

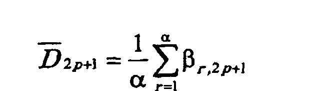

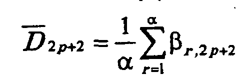

$\overline{\text{D}}$ followed by (*test*) mean the practical demodulated data in test communication and mean value of α demodulated data.

The demodulated data differ from the modulation data in demodulation side, and is adjusted by the way that ratio of amplitude of test communication and practical communication is equal, and adjustment equation is as following. ${\text{x}}_{\text{2}} {\text{}}_{\text{p}} {\text{}}_{\text{+1}} \text{→} \frac{{\text{x}}_{\text{test}} \text{× (} \text{cos} {\text{θ}}_{\text{p}} \text{×} {\overline{\text{D}}}_{\text{2} \text{p} \text{+1}} {\text{- sinθ}}_{\text{p}} {\overline{\text{D}}}_{\text{2} \text{p} \text{+2}} \text{)}}{\text{cos} {\text{θ}}_{\text{p}} \text{×} {\overline{\text{D}}}_{\text{2} \text{p} \text{+1}} \text{(} \text{test} {\text{)-sinθ}}_{\text{p}} \text{×} {\overline{\text{D}}}_{\text{2} \text{p} \text{+2}} \text{(} \text{test} \text{)}}$${\text{x}}_{\text{2} \text{p} \text{+2}} \text{→} \frac{{\text{x}}_{\text{test}} {\text{× (sinθ}}_{\text{p}} \text{×} \overline{\text{D}} \text{2} {\text{p}}_{\text{+1}} {\text{+ cosθ}}_{\text{p}} \overline{\text{D}} \text{2} \text{p} \text{+2)}}{{\text{sinθ}}_{\text{p}} \text{×} {\overline{\text{D}}}_{\text{2} \text{p} \text{+1}} \text{(} \text{test} {\text{)+ cosθ}}_{\text{p}} \text{×} {\overline{\text{D}}}_{\text{2} \text{p} \text{+2}} \text{(} \text{test} \text{)}}$

Therefore demodulation data is adjusted from such influence of communication line.

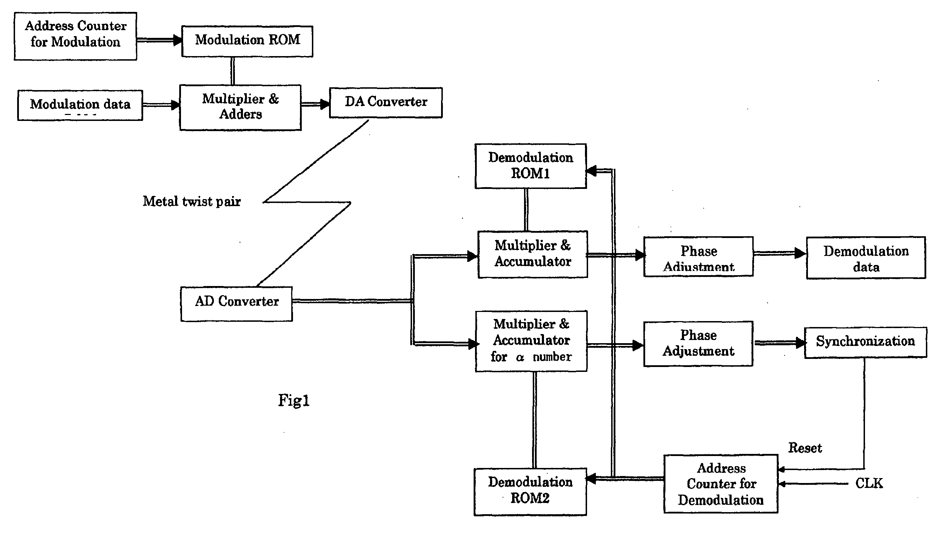

Fig.1 is block diagram of total system of modulation and demodulation. In modulation side, the data of modulation matrix ROM, of which address is specified by the address counter for modulation, and the modulation data are multiplied responding to cosine and sine of all sub-carrier frequency individually and are added all product to the data of DA converter.

In demodulation side, analog signal is converted by the AD converter to digital signal and is multiplied with the data of demodulation matrix ROM1, of which address is specified by the address counter for demodulation, about cosine and sine of all sub-carrier frequency individually in every sampling interval and are accumulated until the end of one modulation block, and adjusted every end of block about phase shift to the adjusted demodulated data.

About the synchronization between the address counter for modulation and address counter for demodulation, ROM named as ROM2 is picked up the memory data belonging to one carrier frequency from the demodulation ROM1, and the data of the other block of memory are moved some address each other to the end of memory address. The receiving data from AD converter is multiplied and accumulated with the memory data of cosine and sine individually in numbers of shift, and at the end of one modulation block, is adjusted about the phase shift and sent to synchronization circuit. In the synchronization circuit, the demodulated data is arranged according to the order of address shift, and the first data of same data series nearly as a is found out, and reset the address counter for demodulation adjusting the delay between the address counter and the number of shift.

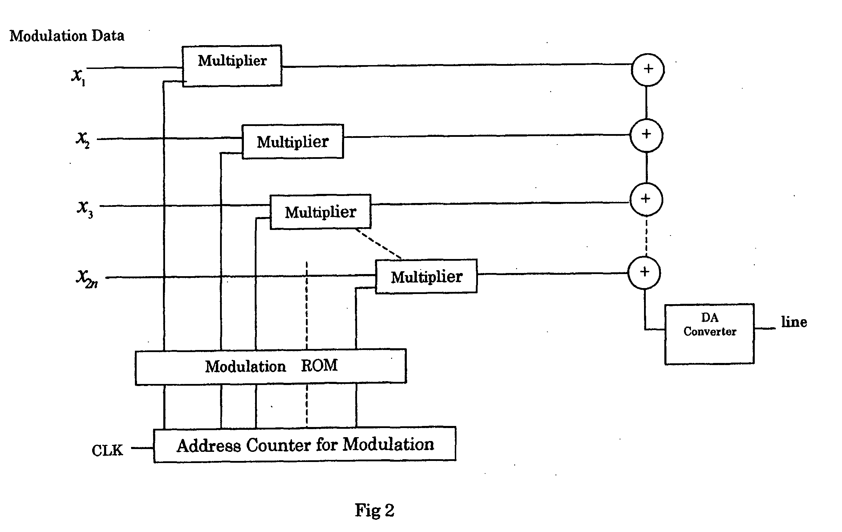

Fig.2 is block diagram of modulation. The maximum number of address counter for modulation is 2 *αn*. Address of modulation ROM is 2 *αn* wide and number of data buss is 2nW(word) wide. 1W of modulation ROM store *Fj*(*i*). This ROM send the data of 2nW wide responding *i*, which is specified as the index of sampling, to the modulation data of 2n. In every clock, the product of each modulation data and specified *Fj*(*i*) of 1W wide are summed together for all number of modulation data and is converted by DA converter to analog to the communication line. Before the practical communication, the test communication is made by the modulation data *x*_{*test*}

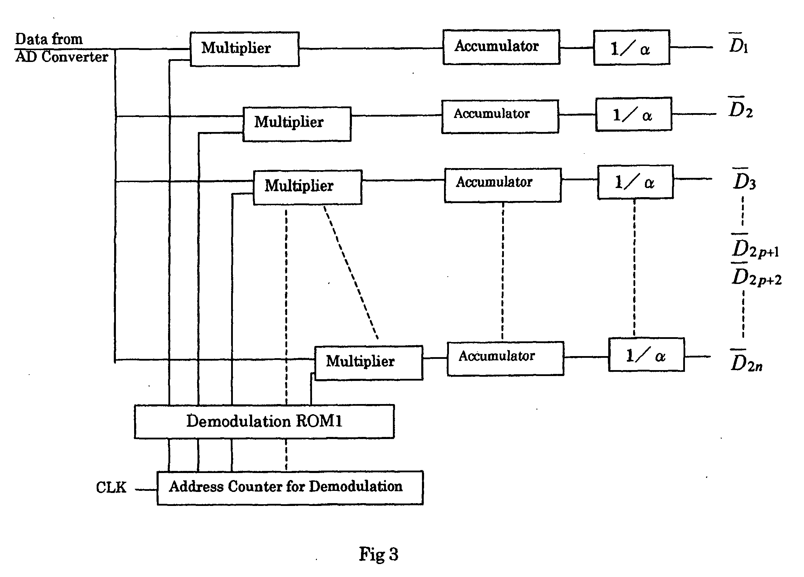

Fig.3 is the block diagram of demodulation to get the demodulated data before adjustment of phase. Maximum address of address counter for demodulation is 2 α n. Address of demodulation ROM1 is 2 α n wide and data of it is 2nw wide (number of 2n of 1W wide ROM). The data of 1W of demodulation ROM1 is specified *Gj*(*i*). The analog signal from communication line is converted to digital by AD converter at same sampling interval as the clock of DA converter in modulation side.

2nW wide data is read out from demodulation ROM1 at every clock, and every 1W related to cosine or sine of sub-carrier frequency individually is multiplied with the receiving data at this moment, and is accumulated individually until the number of 2 α n, and is divided by α as the demodulated data $\overline{\text{D}}$₂_{*p*}₊₁, $\overline{\text{D}}$₂_{*p*}₊₂ before adjustment of phase.

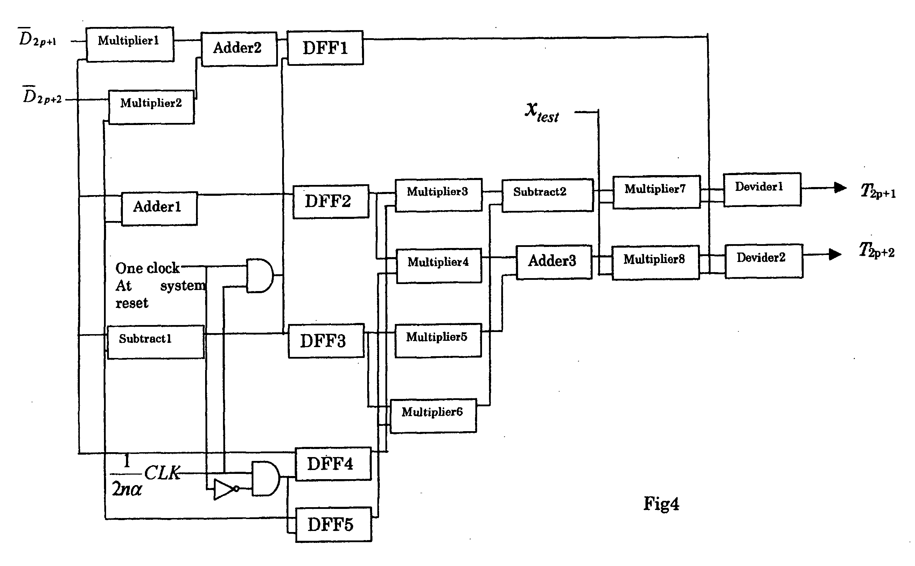

Using the mean value of demodulated data of cosine and sine of same carrier of number p as $\overline{\text{D}}$₂_{*p*}₊₁, $\overline{\text{D}}$₂_{*p*}₊₂ drawn in Fig.3 block diagram, Fig.4 shows the adjustment circuit diagram of phase and magnitude.

About the basic circuit operation in Fig.4, when the system is reset or is happen to change the parameter of adjustment according the condition of communication line, by the modulation data *x*_{*test*} which is determined to exchange at initial test communication by both modulation side and demodulation side, the parameter of adjustment is set. And after this operation, practical communication start and use this parameter for adjustment calculation.

The mean value of demodulation data $\overline{\text{D}}$₂_{*p*}₊₁ and $\overline{\text{D}}$₂_{*p*}₊₂ are squared by block of multiplyerl and multiplyer2 and are added each other by adder2 and are stored by DFF1 at the end of initial test communication after system reset. And this data is sent to DFF1, DFF2 and DFF3 at only one time after initial test communication by one clock in the transmission unit frame time as 2n α as numbers conversions of DA and AD, and stored until next reset after first one.

And by the similar operation, the added value of $\overline{\text{D}}$₂_{*p*}₊₁ and $\overline{\text{D}}$₂_{*p*}₊₂ is stored in DFF2 and difference vale of $\overline{\text{D}}$₂_{*p*}₊₁ and $\overline{\text{D}}$₂_{*p*}₊₂ is stored in DFF3. These three stored data and *x*_{*test*} of initial test data of communication are stored as the parameter of adjustment until next system reset.

As the parameter of adjustment for multiplier.7 and multiplier.8 are as following.

| *x*_{*test*} | |
|---|---|
| data stored in DFF1 | $\overline{\text{D}}$₂_{*p*}₊₁²(*test*)+$\overline{\text{D}}$₂_{*p*}₊₂²(*test*) |
| data stored in DFF2 | $\overline{\text{D}}$₂_{*p*}₊₁(*test*)+$\overline{\text{D}}$₂_{*p*}₊₂(*test*) |
| data stored in DFF3 | $\overline{\text{D}}$₂_{*p*}₊₁(*test*)*-*$\overline{\text{D}}$₂_{*p*}₊₂(*test*) |

In practical communication after the initial test communication, the mean value of demodulated data in every one frame $\overline{\text{D}}$₂_{*p*}₊₁ is stored in DFF4 and $\overline{\text{D}}$₂_{*p*}₊₂ is stored in DFF5 and is renewed at the interval of 2n α number of clock.

Stored data in some operation blocks is as following. 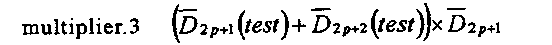 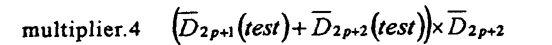 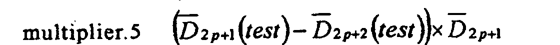 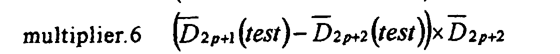 and 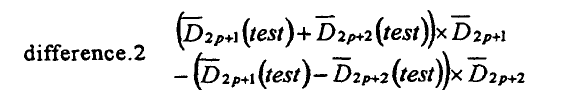 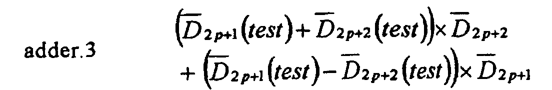 and modulation data in test communication *x*_{*test*} is took in place 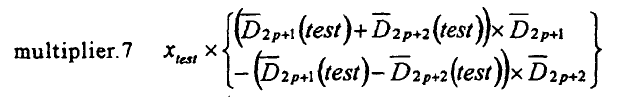 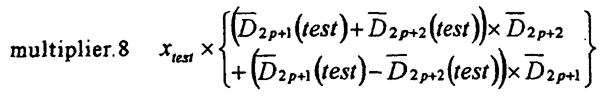 finally, the amount of squared mean value of demodulated data is took in place divider. 1 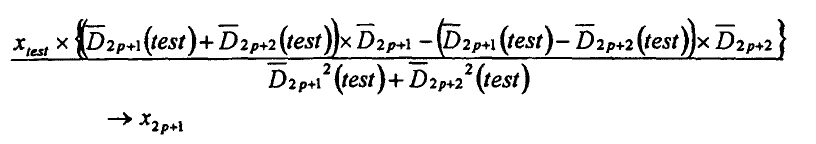 divider.2

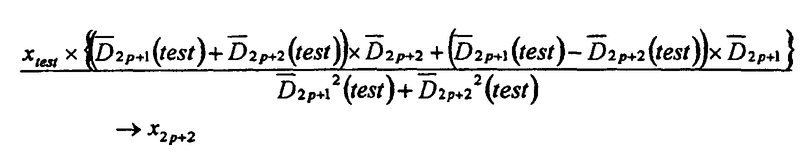

Therefore, the demodulated data is adjusted.

Demodulation data is got at every 2 a n number of data from AD converter which is the frame of one modulation. And phase adjustment of $\overline{\text{D}}$₂_{*p*}₊₁, $\overline{\text{D}}$₂_{*p*}₊₂ in every carrier may be done at 2 α n clock interval. To increase the efficiency of usage of circuit, the amount of circuit decrease by using a time sharing phase adjustment circuit.

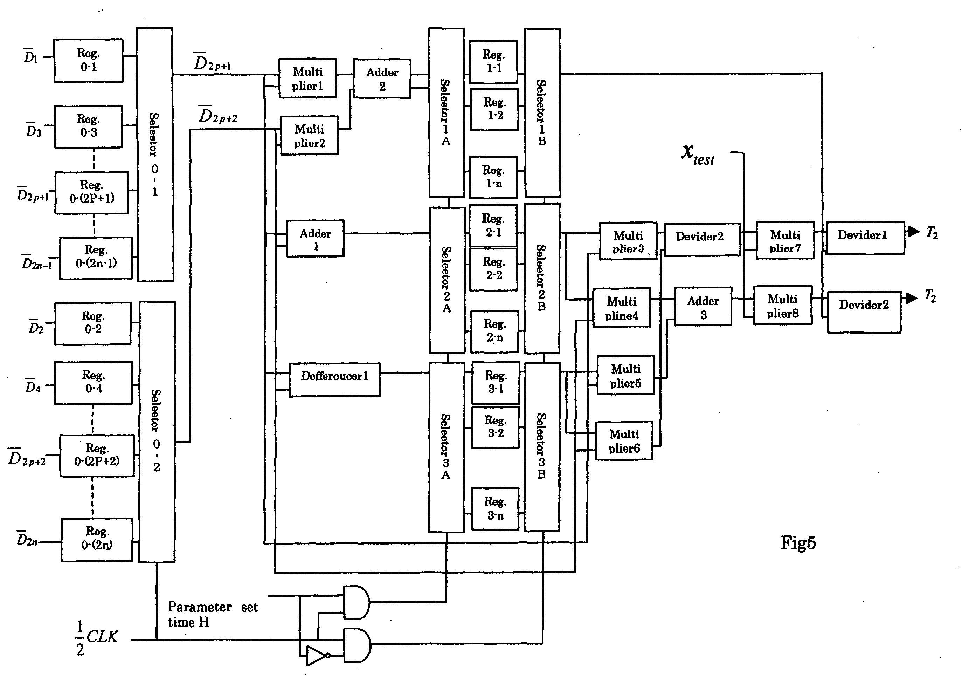

The time sharing phase adjustment circuit is represented in Fig.5. $\overline{\text{D}}$₂_{*p*}₊₁ and $\overline{\text{D}}$₂_{*p*}₊₂ detect and store demodulated data before phase adjustment, and sent one block by selector o to phase adjustment circuit at every one frame. In time sharing phase adjustment circuit, number of n registers in spite of DFF1, DFF2 and DFF3 which are represented in phase adjustment circuit Fig.4 for one sub-carrier frequency, are selected one by one by selector 1 synchronized to selector 0, and are stored as the parameter of every sub-carrier in one round of selector I when the parameter is decided in system. In practical communication, the parameters responding to the index of sub-carrier are selected by the selector 2 synchronizing to the selector 0 in spite of operation DFF4 and DFF5. The calculation in the circuit is done ideally by the pip-line operation. Therefore phase adjusted demodulation data are sent from the time sharing phase adjustment circuit continuously.

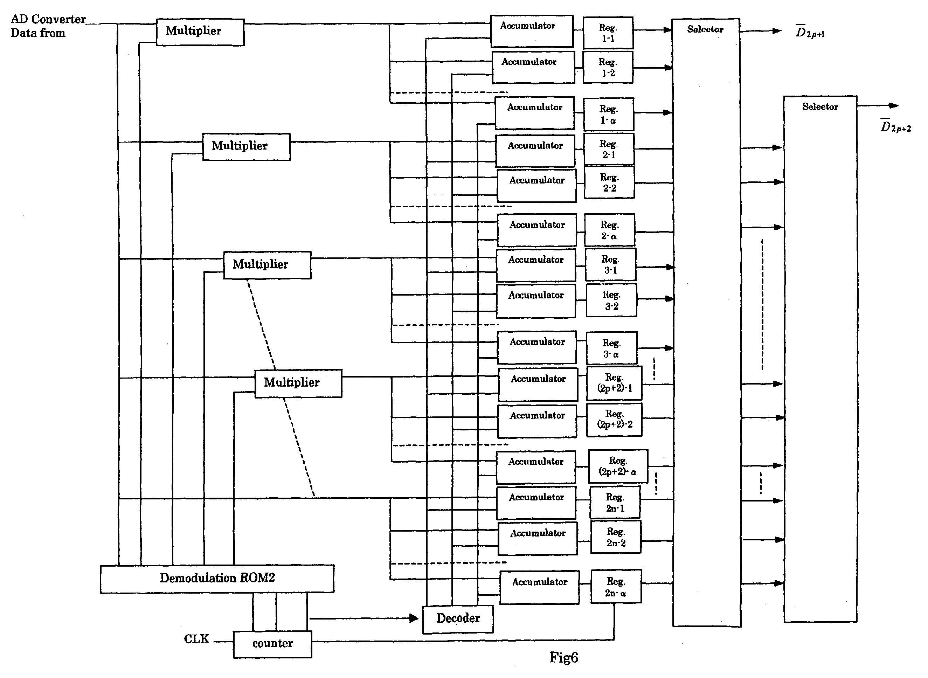

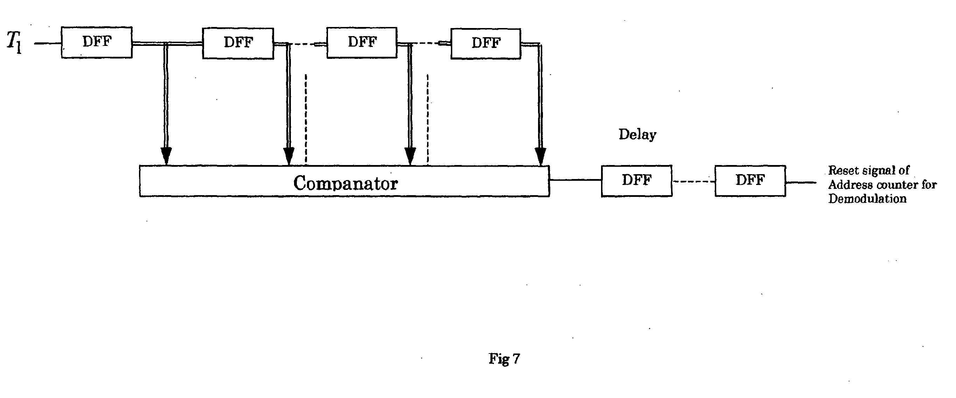

Demodulation circuit block diagram for synchronization is represented in Fig.6. Address counter for demodulation is used for this circuit and output 2 α n addresses. Demodulation ROM2 has 2 α n addresses and 4nW wide data bus. ROM2 pick up the memory data *G*₂_{*p*}₊₁(*i*) and *G*₂_{*p*}₊₂(*i*)belonging to one carrier frequency p from the demodulation ROMl and the data of the other block of memory are moved α address each other to the end of memory address. Data of this ROM2 is 4*nW* wide which is 2*nW* numbers of cosine data and 2*nW* number of sine data. In one clock interval, demodulation ROM2 output 4*nW* wide data, with which the data from AD converter is multiplied and accumulated by α number individually and selected as $\overline{\text{D}}$₂_{*p*}₊₁ and $\overline{\text{D}}$₂_{*p*}₊₂ to the time sharing phase adjustment circuit. Time sharing phase adjustment circuit is operated not by the half clock but by two times clock of address counter. At least, one out put of the time sharing adjustment circuit is sent to synchronization circuit represented in Fig.7 to detect frame synchronized signal. Sense of adjusted demodulated data for synchronization are shifted by equal or less than α number of DFF, and each shifted data are compared, and synchronization signal is output in case of all equal data. This synchronization signal is shifted as long as the delay between synchronization circuit and address counter for demodulation, and reset the counter for demodulation to synchronize the counter for demodulation with the counter for modulation of the other side terminal.

About method of sub-carrier frequency determination described in claim 2, the cosine and sine wave equation of sub-carrier number p are 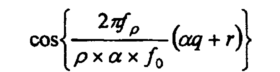 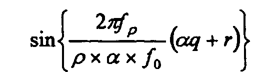 and following equation for sub-carrier frequency reference 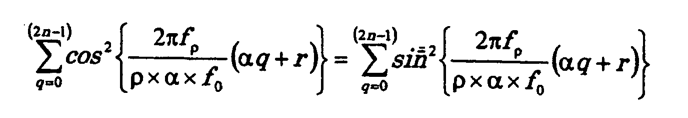 and this equation is solved by many *f*_{*p*} by which is made matrix and inverse matrix. And the difference of range in the inverse matrix elements are not so wide or so near to zero that the proper *f*_{*p*} are selected.

### The transmission speed is as following

The sampling clock of DA converter is CLK and most high frequency of sub-carrier is *f*₀ and ρ is sampling numbers in one wave of most high frequency of sub-carrier$\text{CLK = ρ × α ×} {\text{f}}_{\text{0}} \text{= ρ α} {\text{f}}_{\text{0}}$

The number of sampling of one frame in modulation is same as the number of address of modulation ROM, that is 2 α n. The bits wide of modulation data are specified as A, then the total bits wide of modulation data are 2nA. Therefore the transmission speed is following.$\frac{\text{CLK}}{\text{2α} \text{n}} \text{× 2} \text{nA} \text{=} \text{CLK} \text{×} \frac{\text{A}}{\text{α}}$

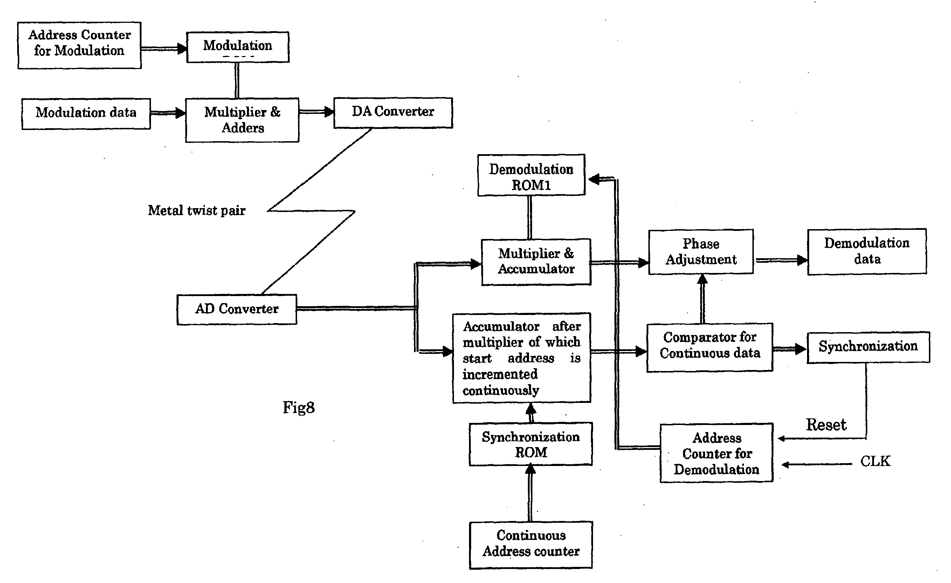

Another method of synchronization block diagram is represented in Fig.8. Although the modulation data are same in first two round address for modulation and same in second two round address of modulation, the modulation data of the sub-carrier which is specified as the use of synchronization should be different in first two round address from in second two round address. The data of demodulation ROM1 which is used for synchronization is called as synchronization ROM. The address of synchronization ROM is connected to the continuous address counter.

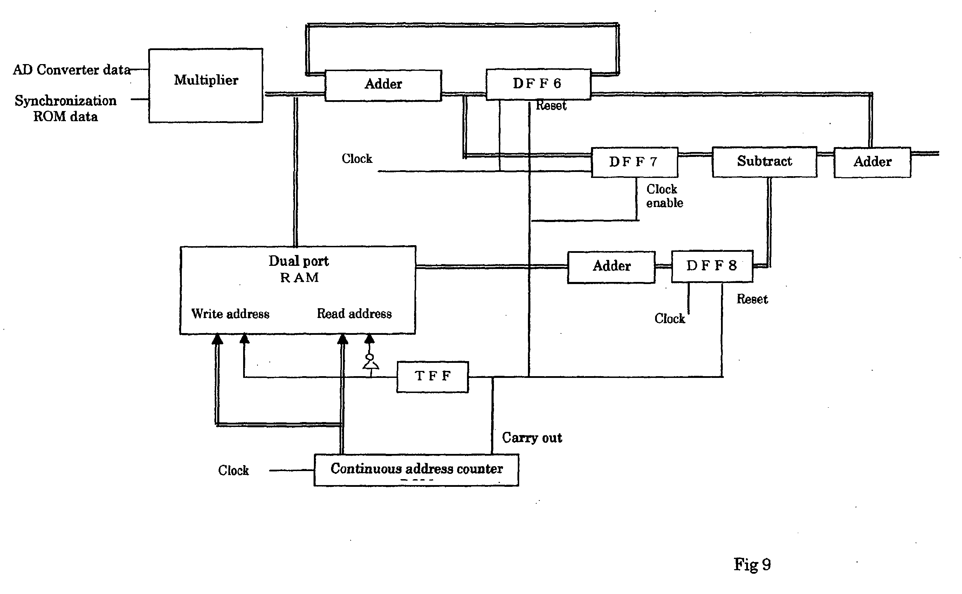

The product of the data from AD converter and the data of synchronization ROM is accumulated for the one round address of demodulation circuit, and the accumulator, which start accumulation from every address for one round addresses to output result continuously, is installed in synchronization circuit. These value of the accumulator after multiplying are not different from each other for the term of same modulation data, but are different from each other for the term of the different modulation data. In synchronization circuit, this property contribute to make synchronization signal which is output by the comparator indication the equality or the difference between two series adjusted demodulated data. Multiplier and accumulator starting from every address is represented in Fig.9.

The data from AD converter and the data of synchronization ROM are multiplied by the circuit of multiplier, and send to the circuit of accumulator. The output of accumulator is sent to DFF6 by every clock, and is returned to accumulator to be added with next data one after another.

The carry-out signal, which is output at every one round of address counter, reset DFF6, and another DFF7 store the last accumulated value as the data of accumulation. This accumulating operation is same as in demodulation circuit.

Until next accumulation from previous this one, the accumulator, which start accumulation from every address for one round addresses, is operated as following. The accumulated data until this time of previous round in DFF8 is subtracted from the previous accumulated data in DFF7 and is added by newly accumulated data until this time in DFF6, and putout this data at every address.

To achieve this operation, dual-port RAM, of which highest write address bit is connected through TFF to carry-out of address counter and the lower address is connected to address counter output, and of which read address is similar to write address with inverted highest address, output the previous round data, which are accumulated and stored in DFF8, and above subscription is got.

Watching whether the number of address counter for demodulation is continuous or not at synchronization, the demodulation data is adjusted in case of over-ride by subscripting the product and incase of less number adding the product.

### [example]

### [effect of invention]

The effect of this invention applied to *DSL* of metal twist pair is described below. The parameter of the modulation and demodulation system is differ from example and determined below.
Number of carrier frequency n = 16
Number of over-sampling α = 8
Bit wide of modulation data A = 8 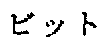
Numbers of basic sampling in one wave form ρ
Most high frequency of sub-carrier *f*₀
defined as ρ *f*₀ = 12.5*MHz*. Sampling frequency CLK of DA and AD converter is$\text{CLK} \text{= ρ × α×} {\text{f}}_{\text{0}} \text{=12.5×8=100} \text{MHz}$ Transmission speed is *CLK* × $\frac{\text{A}}{\text{α}}$ = 100 × $\frac{\text{8}}{\text{8}}$ = 100*Mbps*

About frequency of sub-carrier concern in the frequency range of 6.0MHz∼0.09MHz

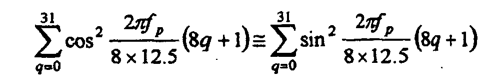

The frequency is determined as

| | | | |
|---|---|---|---|
| *f*₀ = 0.0950*MHz* | *f*₁ = 0.473*MHz* | *f*₂ = 0.852*MHz* | *f*₃ = 1.231*MHz* |
| *f*₄ = 1.610*MHz* | *f*₅ = 1.989*MHz* | *f*₆ = 2.368*MHz* | *f*₇ = 2.747*MHz* |
| *f*₈ = 3.314*MHz* | *f*₉ = 3.693*MHz* | *f*₁₀ = 4.072*MHz* | *f*₁₁ = 4.451*MHz* |
| *f*₁₂ = 4.830*MHz* | *f*₁₃ = 5.208*MHz* | *f*₁₄ = 5.588*MHz* | *f*₁₅ = 5.966*MHz* |

### [simple prove of Fig.]

[Fig.1] Modulation and demodulation total system block diagram.
[Fig.2] Block diagram of modulation.
[Fig.3] Block diagram of demodulation.
[Fig.4] Block diagram of phase and magnitude adjustment.
[Fig.5] Block diagram of distributed time phase and magnitude adjustment.
[Fig.6] Block diagram of demodulation for synchronization.
[Fig.7] Block diagram of adjustment signal.
[Fig.8] Block diagram of adjustment signal.
[Fig.9] Block diagram of adjustment signal.

### [simple prove of symbol]

- DFF: data flip-flop.
- CLK: clock.
- ROM: read only memory.
- TFF: toggle flip-flop.

### [example]

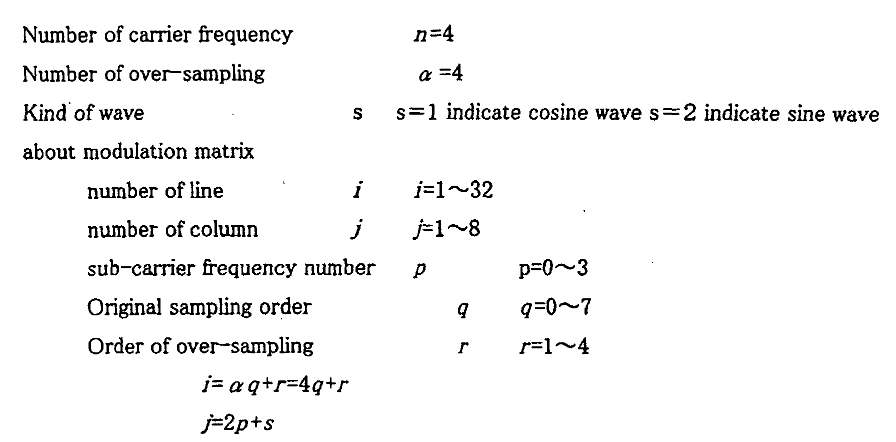

the elements of matrix${\text{F}}_{\text{j}} \text{(} \text{i} \text{)=} {\text{F}}_{\text{2}} {\text{}}_{\text{p}} {\text{}}_{\text{+s}} \text{(4} \text{q} \text{+} \text{r} \text{)}$

Number of original sampling in one complete wave form ρ = 2.399

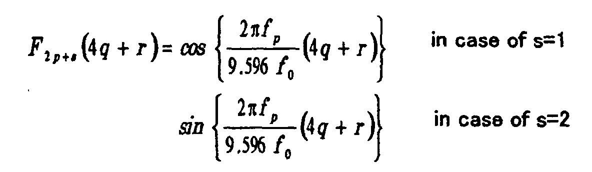

| | |
|---|---|
| *f*₀ =1.0423 | *MHz* |
| *f*₁ =0.7809 | *MHz* |
| *f*₂ =0.6255 | *MHz* |
| *f*₃ =0.4684 | *MHz* |

| | |
|---|---|
| basic sampling interval | 383.7 *nSec* |
| over-sampling interval | 95.9 *nSec* |

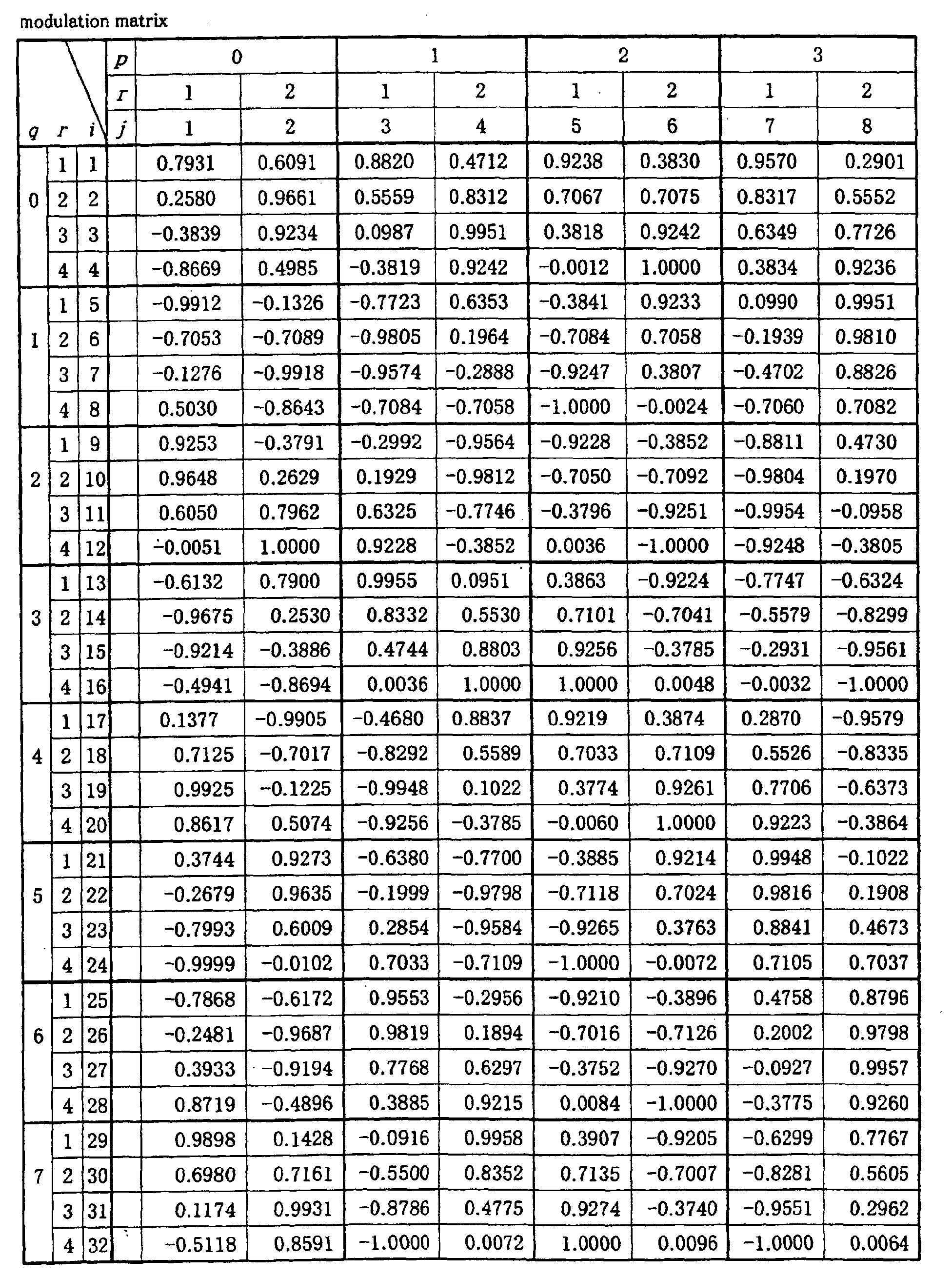

| method of demodulation matrix creation for exanple, matrix of which size is 8 lines and 8 columns is created by picking the line number r=1 | | | | | | | | | |
|---|---|---|---|---|---|---|---|---|---|
| | *p* | 0 | | 1 | | 2 | | 3 | |
| | r | 1 | 2 | 1 | 2 | 1 | 2 | 1 | 2 |
| *q* | *j* | 1 | 2 | 3 | 4 | 5 | 6 | 7 | 8 |
| 0 | | 0.7931 | 0.6091 | 0.8820 | 0.4712 | 0.9238 | 0.3830 | 0.9570 | 0.2901 |
| 1 | | -0.9912 | -0.1326 | -0.7723 | 0.6353 | -0.3841 | 0.9233 | 0.0990 | 0.9951 |
| 2 | | 0.9253 | -0.3791 | -0.2922 | -0.9564 | -0.9228 | -0.3852 | -0.8811 | 0.4730 |
| 3 | | -0.6132 | 0.7900 | 0.9955 | 0.0951 | 0.3863 | -0.9224 | -0.7747 | -0.6324 |
| 4 | | 0.1377 | -0.9905 | -0.4680 | 0.8837 | 0.9219 | 0.3874 | 0.2870 | -0.9579 |
| 5 | | 0.3744 | 0.9273 | -0.6380 | -0.7700 | -0.3885 | 0.9214 | 0.9948 | -0.1022 |
| 6 | | -0.7868 | -0.6172 | 0.9553 | -0.2956 | -0.9210 | -0.3896 | 0.4758 | 0.8796 |
| 7 | | 0.9898 | 0.1428 | -0.0916 | 0.9958 | 0.3907 | -0.9205 | -0.6299 | 0.7767 |
| the demodulation matrix is inverse matrix of the above matrix | | | | | | | | | |

| demodulation matrix 1 | | | | | | | | | |
|---|---|---|---|---|---|---|---|---|---|
| | *p* | 0 | | 1 | | 2 | | 3 | |
| | *r* | 1 | 2 | 1 | 2 | 1 | 2 | 1 | 2 |
| *q* | *j* | 1 | 2 | 3 | 4 | 5 | 6 | 7 | 8 |
| 0 | | 0.4731 | 0.3770 | 1.1419 | 0.9096 | 1.1411 | 0.9106 | 0.4728 | 0.3773 |
| 1 | | 0.0658 | 0.2928 | 0.1586 | 0.7069 | 0.1580 | 0.7070 | 0.0656 | 0.2929 |
| 2 | | 0.8459 | 0.7289 | 1.3268 | 1.4849 | 1.2389 | 0.6677 | 0.7577 | -0.0911 |
| 3 | | 0.4480 | 1.3872 | 1.6732 | 2.4612 | 2.5938 | 2.0283 | 1.3717 | 0.9529 |
| 4 | | -0.3821 | -1.5709 | -2.4948 | -3.1259 | -3.1454 | -2.8527 | -1.9564 | -0.9097 |
| 5 | | 0.9092 | 1.1926 | 1.5310 | 1.3061 | 1.2585 | 0.6558 | 0.2499 | -0.3810 |
| 6 | | -0.3523 | -0.6481 | -0.9441 | -0.7554 | -0.3619 | 0.1264 | 0.2291 | 0.2326 |
| 7 | | -0.1056 | -0.5488 | -1.1693 | -1.7617 | -1.8824 | -1.4975 | -0.8178 | -0.2849 |

| demodulation matrix 2 | | | | | | | | | |
|---|---|---|---|---|---|---|---|---|---|
| | *p* | 0 | | 1 | | 2 | | 3 | |
| | *r* | 1 | 2 | 1 | 2 | 1 | 2 | 1 | 2 |
| *q* | *j* | 1 | 2 | 3 | 4 | 5 | 6 | 7 | 8 |
| 0 | | 0.3351 | 0.1206 | 0.8091 | 0.2909 | 0.8088 | 0.2916 | 0.3351 | 0.1209 |
| 1 | | 0.3403 | 0.4618 | 0.8213 | 1.1147 | 0.8203 | 1.1154 | 0.3400 | 0.4621 |
| 2 | | 0.5350 | -0.0107 | 0.3819 | 0.1500 | -0.1295 | -0.3669 | 0.0219 | -0.5293 |
| 3 | | 0.7938 | 1.5670 | 2.1010 | 2.8705 | 2.8715 | 2.1036 | 1.5669 | 0.7976 |
| 4 | | -0.7012 | -1.9079 | -2.8909 | -3.3878 | -3.3876 | -2.8863 | -1.9030 | -0.6944 |
| 5 | | 0.6936 | 0.5000 | 0.4588 | 0.0094 | -0.0421 | -0.4867 | -0.5184 | -0.7003 |
| 6 | | -0.3065 | -0.4610 | -0.5643 | -0.2119 | 0.1997 | 0.5554 | 0.4565 | 0.3052 |
| 7 | | -0.2032 | -0.7132 | -1.3929 | -1.9051 | -1.9064 | -1.3964 | -0.7161 | -0.2052 |

| demodulation matrix 3 | | | | | | | | | |
|---|---|---|---|---|---|---|---|---|---|
| | *p* | 0 | | 1 | | 2 | | 3 | |
| | *r* | 1 | 2 | 1 | 2 | 1 | 2 | 1 | 2 |
| *q* | *j* | 1 | 2 | 3 | 4 | 5 | 6 | 7 | 8 |
| 0 | | 0.0585 | -0.1856 | 0.1414 | -0.4483 | 0.1418 | -0.4482 | 0.0586 | -0.1856 |
| 1 | | 0.4740 | 0.4398 | 1.1442 | 1.0612 | 1.1432 | 1.0622 | 0.4737 | 0.4401 |
| 2 | | 0.0979 | -0.7478 | -0.6531 | -1.2202 | -1.4673 | -1.3148 | -0.7190 | -0.8427 |
| 3 | | 0.9522 | 1.3771 | 2.0331 | 2.6026 | 2.4718 | 1.6826 | 1.3924 | 0.4541 |
| 4 | | -0.9133 | -1.9539 | -2.8462 | -3.1332 | -3.1132 | -2.4799 | -1.5594 | -0.3733 |
| 5 | | 0.3722 | -0.2687 | -0.6832 | -1.2887 | -1.3362 | -1.5549 | -1.2076 | -0.9129 |
| 6 | | -0.2344 | -0.2343 | -0.1359 | 0.3499 | 0.7442 | 0.9366 | 0.6446 | 0.3516 |
| 7 | | -0.2834 | -0.8163 | -1.4967 | -1.8847 | -1.7665 | -1.1753 | -0.5529 | -0.1078 |

| demodulation matrix4 | | | | | | | | | |
|---|---|---|---|---|---|---|---|---|---|
| | *p*. | 0 | | 1 | | 2 | | 3 | |
| | *r* | 1 | 2 | 1 | 2 | 1 | 2 | 1 | 2 |
| *q* | *j* | 1 | 2 | 3 | 4 | 5 | 6 | 7 | 8 |
| 0 | | -0.2423 | -0.4151 | -0.5848 | -1.0019 | -0.5839 | -1.0024 | -0.2420 | -0.4153 |
| 1 | | 0.4116 | 0.2357 | 0.9936 | 0.5686 | 0.9931 | 0.5695 | 0.4114 | 0.2360 |
| 2 | | -0.3624 | -1.3085 | -1.5340 | -2.3026 | -2.4589 | -1.9525 | -1.2902 | -0.9572 |
| 3 | | 0.8860 | 0.8623 | 1.4855 | 1.7206 | 1.4888 | 0.8646 | 0.8893 | 0.0034 |
| 4 | | -0.9862 | -1.7021 | -2.3676 | -2.4008 | -2.3642 | -4.6954 | -0.9780 | 0.0047 |
| 5 | | -0.0059 | -0.9965 | -1.7211 | -2.3903 | -2.4266 | -2.3861 | -1.7128 | -0.9862 |
| 6 | | -0.1421 | 0.0126 | 0.3041 | 0.8816 | 1.2246 | 1.2372 | 0.7773 | 0.3678 |
| 7 | | -0.3392 | -0.8491 | -1.4717 | -1.7021 | -1.4747 | -0.8531 | -0.3421 | -0.0012 |

the frequency of sub-carriers is determined as below
*r*=1 *α*=4 *ρ f*₀=2.5×1.0 and according to below equation

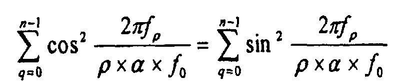

| | |
|---|---|
| *f*₀ = 1.0423 *MHz* | *f*₁ = 0.7809 *MH* |
| *f*₂ = 0.6255 *MHz* | *f*₃ = 0.4684 *MHz* |

therefore p =2.399 is got.
if the bit wide of the modulation data is only one bit, the trancemission speed is$\text{2.399 × 4 × 1.0423} \frac{\text{1}}{\text{4}} \text{= 2.5} \text{Mbps}$ elements data of modulation matris and demodulation matrix 1∼4 should be changed to positive hex number to store in ROM, and the example method about cos θ is descrived as following$\frac{\text{cos θ + 1}}{\text{2}} \text{× 65535}$$\frac{\text{data of demodulati on matrix + (absolute maximum negative data of demodulati on matrix)}}{\text{(absolute maximum negative data of demodulati on matrix) × 2}} \text{× 63535}$ by above equation, cos θ values of modulation matrix and of demodulation matris 1∼4 are changed to positive dezimal number and are changed to hex number and are stored in ROM.
each address of ROMs are i-1 and q, and the number of port is j and 16 bits wide in this example.
at first in test communication, modulation is done as all modulation data are 15(F)${\text{x}}_{\text{1}} \text{=} {\text{x}}_{\text{2}} \text{=} {\text{x}}_{\text{3}} \text{= • • • • • •} {\text{x}}_{\text{8}} \text{= 15}$

| modulated data for DA converter input | |
|---|---|
| *i* | *d*ᵢ |
| 1 | 81.1867 |
| 2 | 65.2033 |
| 3 | 37.1970 |
| 4 | 5.5872 |
| 5 | -21.2066 |
| 6 | -37.4566 |
| 7 | -41.6358 |
| 8 | -36.2772 |
| 9 | -26.3720 |
| 10 | -17.0527 |
| 11 | -11.5364 |
| 12 | -10.1358 |
| 13 | -10.6513 |
| 14 | -9.8615 |
| 15 | -5.3745 |
| 16 | 3.0202 |
| 17 | 13.1080 |
| 18 | 21.2131 |
| 19 | 23.9238 |
| 20 | 19.7870 |
| 21 | 10.1836 |
| 22 | -1.0532 |
| 23 | -9.1617 |
| 24 | -10.4938 |
| 25 | -4.1968 |
| 26 | 7.2201 |
| 27 | 18.7377 |
| 28 | 24.8063 |
| 29 | 21.6671 |
| 30 | 9.0569 |
| 31 | -9.4422 |
| 32 | 79.6386 |

above data are changed a little by the noise of line to demodulation circuit

| *i* | *d*ᵢ |
|---|---|
| 1 | 79.7745 |
| 2 | 81.1090 |
| 3 | 65.0050 |
| 4 | 37.0460 |
| 5 | 5.6597 |
| 6 | -21.4443 |
| 7 | -37.4286 |
| 8 | -41.5717 |
| 9 | -36.3611 |
| 10 | -26.2757 |
| 11 | -17.1823 |
| 12 | -11.3325 |
| 13 | -10.1673 |
| 14 | -10.4529 |
| 15 | -9.9276 |
| 16 | -5.3161 |
| 17 | 3.3021 |
| 18 | 12.8503 |
| 19 | 21.3957 |
| 20 | 23.7096 |
| 21 | 19.4529 |
| 22 | 10.3367 |
| 23 | -1.1009 |
| 24 | -9.2484 |
| 25 | -10.4869 |
| 26 | -3.8698 |
| 27 | 7.3148 |
| 28 | 18.5145 |
| 29 | 24.5774 |
| 30 | 21.4752 |
| 31 | 9.2918 |
| 32 | -9.5909 |

and above data are delayed one over-sampling and demodulated using the demodulation matrix 1∼4 the mean value of demodulation data are

| *q* | *r* | *j* | *x*_{*j*} |
|---|---|---|---|
| 0 | 1 | 1 | 10.9686 |
| | 2 | 2 | 4.0607 |
| 1 | 1 | 3 | 12.015 |
| | 2 | 4 | 8.7172 |
| 2 | 1 | 5 | 12.6055 |
| | 2 | 6 | 11.1354 |
| 3 | 1 | 7 | 13.4383 |
| | 2 | 8 | 12.7259 |

the parameters of adjustment are determined as

| *p* | $\overline{\text{D}}$₂_{*p*}₊₁²(*test*)+$\overline{\text{D}}$₂_{*p*}₊₂²(*test*) |
|---|---|
| 0 | 136.8002 |
| 1 | 220.3448 |
| 2 | 282.8956 |
| 3 | 342.5367 |

| *p* | $\overline{\text{D}}$₂_{*p*}₊₁(*test* )+ $\overline{\text{D}}$ ₂_{*p*}₊₂(*test* ) |
|---|---|
| 0 | 15.0293 |
| 1 | 20.7322 |
| 2 | 23.7409 |
| 3 | 26.1642 |

| *p* | $\overline{\text{D}}$₂_{*p+*}₁(*test* )- $\overline{\text{D}}$₂*p*+2(*test* ) |
|---|---|
| 0 | 6.908 |
| 1 | 3.2977 |
| 2 | 1.4702 |
| 3 | 0.7124 |

modulation data are as any data *x*₁ = *x*₅ = 1, *x*₂ = *x*₆ = 15, *x*₃ = *x*₇ = -1, *x*₄ = *x*₈ = -15 in Dractical communication, modulaed data are

| *i* | *d*_{*i*} |
|---|---|
| 1 | 3.8853 |
| 2 | 0.4624 |
| 3 | -6.1088 |
| 4 | -13.2972 |
| 5 | -17.9469 |
| 6 | -17.698 |
| 7 | -12.1194 |
| 8 | -3.0384 |
| 9 | 6.1155 |
| 10 | 11.7103 |
| 11 | 11.4849 |
| 12 | 5.6252 |
| 13 | -3.1445 |
| 14 | -10.5474 |
| 15 | -12.4635 |
| 16 | -6.6923 |
| 17 | 5.9496 |
| 18 | 21.6735 |
| 19 | 34.9428 |
| 20 | 40.4428 |
| 21 | 35.062 |
| 22 | 19.1293 |
| 23 | -3.5679 |
| 24 | -26.9999 |
| 25 | -44.8891 |
| 26 | -52.7427 |
| 27 | -49.1863 |
| 28 | -36.1509 |
| 29 | -17.9151 |
| 30 | 0.5586 |
| 31 | 15.3163 |
| 32 | 3.3394 |

above data are changed a little by the noise of line to demodulation circuit

| *i* | *d*_{*i*} |
|---|---|
| 1 | 3.4752 |
| 2 | 3.8076 |
| 3 | 0.2641 |
| 4 | -6.2598 |
| 5 | -13.2246 |
| 6 | -18.1845 |
| 7 | -17.6699 |
| 8 | -12.0553 |
| 9 | -3.1223 |
| 10 | 6.2118 |
| 11 | 11.5807 |
| 12 | 11.6888 |
| 13 | 5.5937 |
| 14 | -2.9461 |
| 15 | -10.6135 |
| 16 | -12.4051 |
| 17 | -6.4104 |
| 18 | 5.6919 |
| 19 | 21.8561 |
| 20 | 34.7286 |
| 21 | 40.1087 |
| 22 | 35.2151 |
| 23 | 19.0815 |
| 24 | -3.6546 |
| 25 | -26.993 |
| 26 | -44.5621 |
| 27 | -52.648 |
| 28 | -49.4096 |
| 29 | -36.3798 |
| 30 | -18.107 |
| 31 | 0.7936 |
| 32 | 15.1676 |

and above data are delayed one over-sampling and demodulated using the demodulation matrix 1∼4 the mean value of demodulation data are

| *q* | *r* | *j* | *x*_{*j*} |
|---|---|---|---|
| 0 | 1 | 1 | 3.9847 |
| | 2 | 2 | 7.2244 |
| 1 | 1 | 3 | -2.1027 |
| | 2 | 4 | -10.1946 |
| 2 | 1 | 5 | 1.5695 |
| | 2 | 6 | 11.9217 |
| 3 | 1 | 7 | -1.3175 |
| | 2 | 8 | -13.1774 |

the out out adiusted data bv which is mentioned adiustment circuit in thic paper using above adjustment parameter

| *q* | *r* | *j* | *x*_{*j*} |
|---|---|---|---|
| 0 | 1 | 1 | 1.0945 |
| | 2 | 2 | 14.9236 |
| 1 | 1 | 3 | -0.679 |
| | 2 | 4 | -14.8599 |
| 2 | 1 | 5 | 1.0464 |
| | 2 | 6 | 15.1295 |
| 3 | 1 | 7 | -1.0984 |
| | 2 | 8 | -15.1392 |

above data is rounded as below

| *q* | *r* | *j* | *x*_{*j*} |
|---|---|---|---|
| 0 | 1 | 1 | 1 |
| | 2 | 2 | 15 |
| 1 | 1 | 3 | -1 |
| | 2 | 4 | -15 |
| 2 | 1 | 5 | 1 |
| | 2 | 6 | 15 |
| 3 | 1 | 7 | -1 |
| | 2 | 8 | -15 |

this demodulation data is same as the modulation data of transmission side.
stored data in modulation ROM (data of modulation matrix exchanged to positive Hex. data)

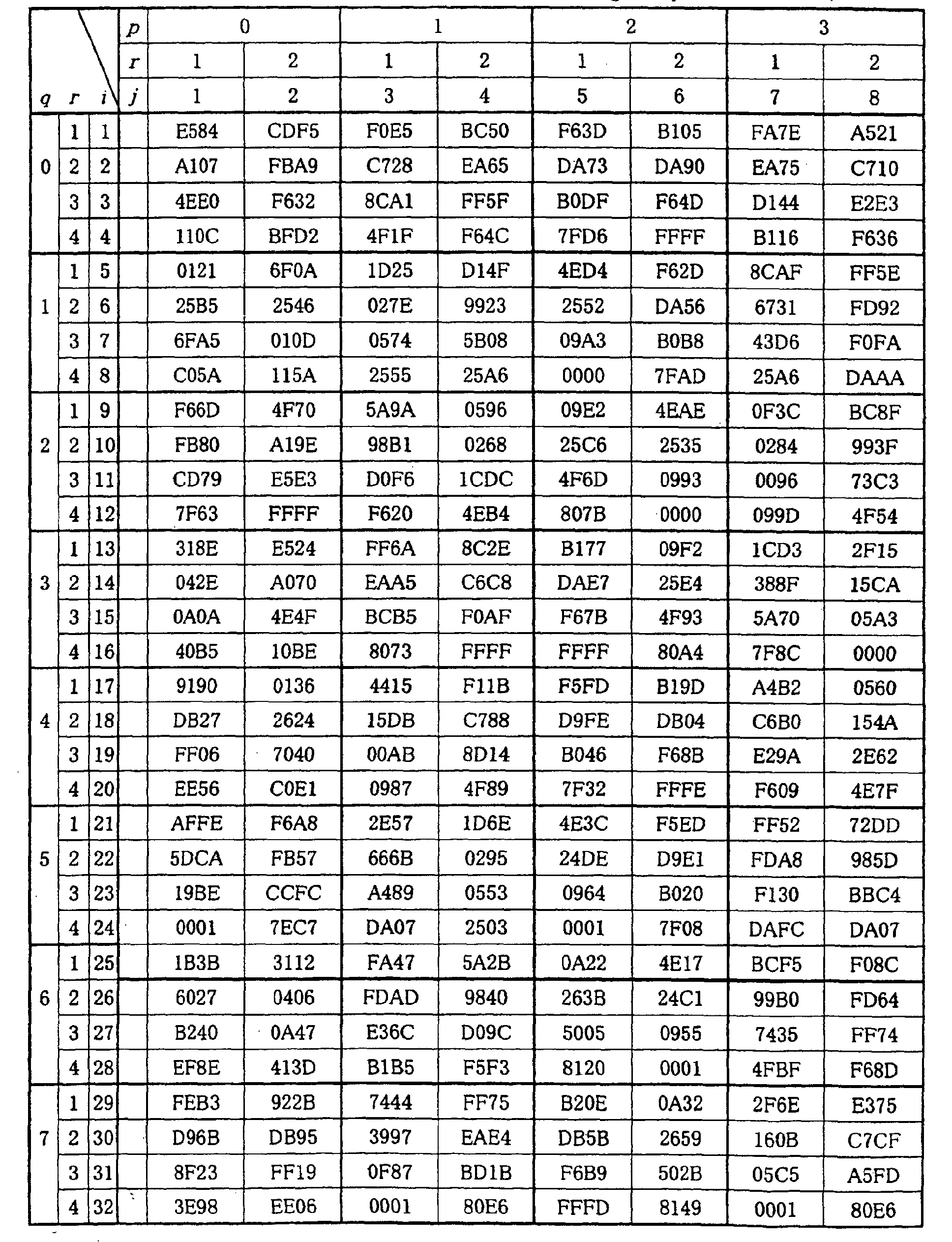

| demodulation ROM1-1(data of demodulation matrxi1 exchanged to positive Hex. data) | | | | | | | | | |
|---|---|---|---|---|---|---|---|---|---|
| | *p* | 0 | | 1 | | 2 | | 3 | |
| | *r* | 1 | 2 | 1 | 2 | 1 | 2 | 1 | 2 |
| *q* | *j* | 1 | 2 | 3 | 4 | 5 | 6 | 7 | 8 |
| 0 | | 9D62 | 997B | B890 | AF21 | B887 | AF2C | 9D5F | 997E |
| 1 | | 8CD2 | 960D | 9094 | A6DE | 908D | A6DF | 8CD0 | 960D |
| 2 | | AC89 | A7C5 | C013 | C67C | BC7F | A548 | A8F2 | 8674 |
| 3 | | 9C5E | C288 | CE26 | EE2C | F38D | DC95 | ClE6 | B0E2 |
| 4 | | 7AA0 | 4A52 | 24CB | 0B29 | 0A60 | 1643 | 3AAC | 6533 |
| 5 | | AF18 | BA97 | C855 | BF2F | BD43 | A4C7 | 944D | 7AAC |
| 6 | | 7BD9 | 6FD3 | 63CC | 6B74 | 7B6F | 8F46 | 9374 | 939A |
| 7 | | 85E0 | 73E0 | 5AAE | 429D | 3DB5 | 4D55 | 68Fl | 7E95 |

| demodulation ROM1-2(data of demodulation matrix2 exchanged to positive Hex. data) | | | | | | | | | |
|---|---|---|---|---|---|---|---|---|---|
| | *p* | 0 | | 1 | | 2 | | 3 | |
| | *r* | 1 | 2 | 1 | 2 | 1 | 2 | 1 | 2 |
| *q* | *j* | 1 | 2 | 3 | 4 | 5 | 6 | 7 | 8 |
| 0 | | 97C8 | 8F11 | ABOD | 95FE | AB0A | 9606 | 97C7 | 8F13 |
| 1 | | 97FB | 9CEC | AB83 | B772 | AB79 | B77A | 97F7 | 9CEF |
| 2 | | 9FE6 | 89B7 | 99AC | 903D | 84E5 | 7B3E | 8B0C | 74A5 |
| 3 | | AA6B | C9D6 | DF89 | FECC | FED7 | DFA4 | C9D5 | AA92 |
| 4 | | 6DA9 | 3CA4 | 14B6 | 0089 | 008B | 14E7 | 3CD9 | 6DF2 |
| 5 | | A655 | 9E73 | 9CC5 | 8A81 | 886D | 765D | 7516 | 6DB3 |
| 6 | | 7DB4 | 776C | 7737 | 8187 | 923E | A0B3 | 9CB0 | 968D |
| 7 | | 81E8 | 6D32 | 5198 | 3CC8 | 3CB9 | 516F | 6D11 | 81D2 |

| demodulation ROM1-3(data of demodulation matrix3 exchanged to positive Hex. data) | | | | | | | | | |
|---|---|---|---|---|---|---|---|---|---|
| | *p* | 0 | | 1 | | 2 | | 3 | |
| | *r* | 1 | 2 | 1 | 2 | 1 | 2 | 1 | 2 |
| *q* | *q* | 1 | 2 | 3 | 4 | 5 | 6 | 7 | 8 |
| 0 | | 8C8B | 829F | 8FED | 77F6 | 8FF2 | 77F7 | 8C8D | 829F |
| 1 | | 9D6B | 9C08 | B8A5 | B549 | B89B | B554 | 9D68 | 9C0B |
| 2 | | 8E22 | 6BC3 | 6F9D | 588F | 4E89 | 54B8 | 6CF0 | 67E9 |
| 3 | | B0DB | C21D | DCC6 | F3E7 | EE98 | CE87 | C2BD | 9C9C |
| 4 | | 650B | 3AC7 | 1689 | 0AE5 | 0BB3 | 256C | 4AD0 | 7AFF |
| 5 | | 9945 | 7F37 | 6E5F | 55C5 | 53DB | 4AF7 | 5916 | 6510 |
| 6 | | 80A2 | 80A0 | 849C | 9857 | A85B | B02F | A455 | 9870 |
| 7 | | 7EA6 | 6902 | 4D5F | 3D9B | 4266 | 5A69 | 73B1 | 85C6 |

| demodulation ROM1-4(data of demodulation matrix4 exchanged to positive Hex. data) | | | | | | | | | |
|---|---|---|---|---|---|---|---|---|---|
| | *p* | 0 | | 1 | | 2 | | 3 | |
| | *r* | 1 | 2 | 1 | 2 | 1 | 2 | 1 | 2 |
| *q* | *j* | 1 | 2 | 3 | 4 | 5 | 6 | 7 | 8 |
| 0 | | 8051 | 794B | 726B | 6175 | 7274 | 616F | 8055 | 7949 |
| 1 | | 9AE3 | 93BE | B28B | A147 | B286 | A151 | 9AE2 | 93C1 |
| 2 | | 7B6D | 54FB | 4BD1 | 2C95 | 263E | 3ACF | 55BA | 6341 |
| 3 | | AE2A | AD31 | C685 | D00F | C6A7 | AD48 | AE4C | 8A4B |
| 4 | | 6216 | 4505 | 29FE | 28A9 | 2A23 | 454E | 626F | 8A5C |
| 5 | | 89E8 | 61A6 | 4436 | 2907 | 2791 | 2935 | 4491 | 6216 |
| 6 | | 8461 | 8AA7 | 967B | ADF0 | BBE0 | BC66 | A9B9 | 9918 |
| 7 | | 7C62 | 67AB | 4E60 | 4503 | 4E3E | 677E | 7C40 | 8A1B |

before the multiplication, data stored in ROM is exchanged to the number indicating positive or negat also the modulation data is exchanged to the number having positive or negative signe.
where Di is 8bit modulation data, equation of exchage is$\text{2×} \text{Di} \text{-255}$ when the result of calculation prosess is output, the data is done by inverse exchange.
to combine these four demodulation ROM of which data placed at timing proper over-sampling position demodulation ROM1(combined data of 4 ROMs)

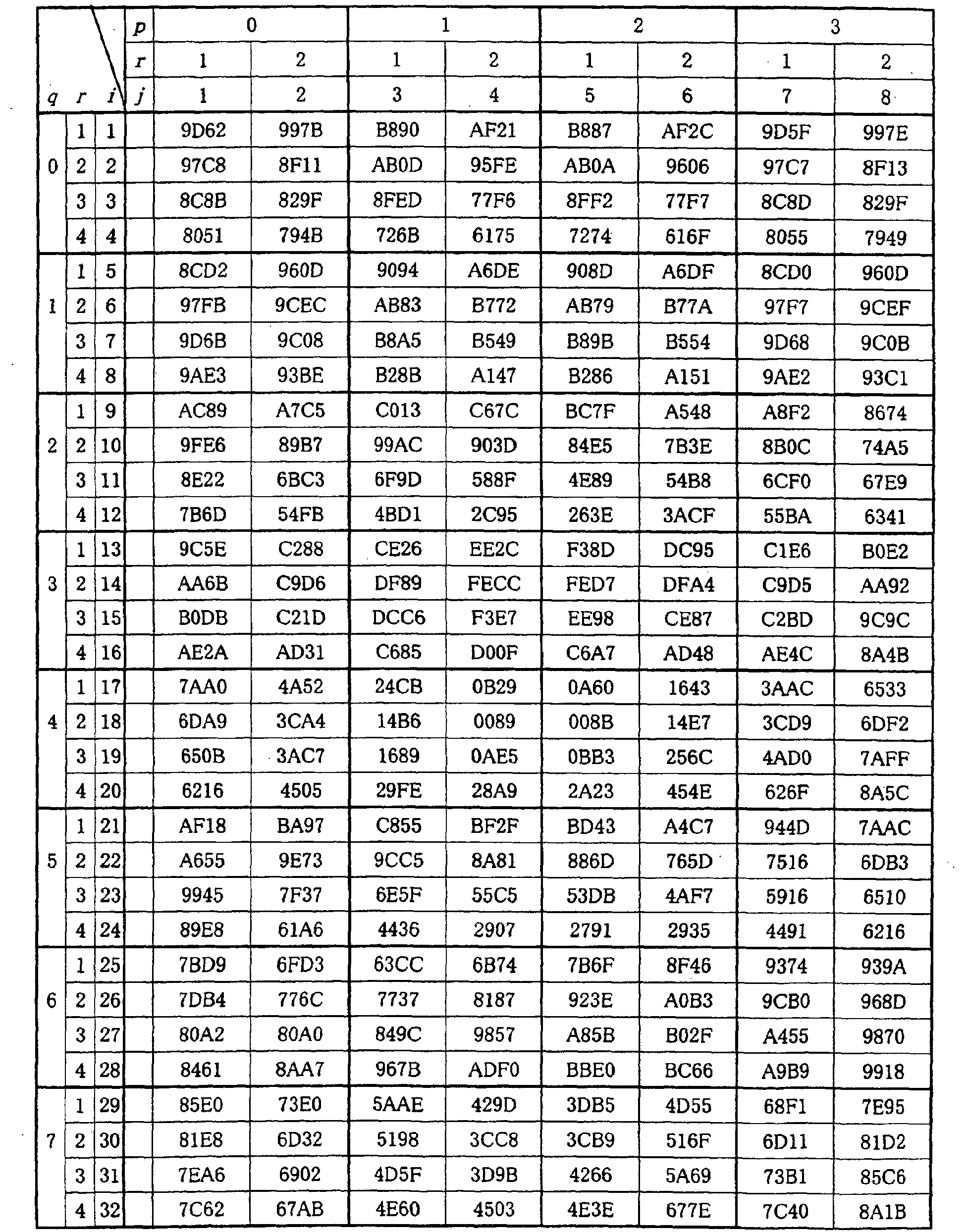

the circuit block diagram which use demodulation ROM1 combined data in number of over-sampling represented in Fig.5, and output the demodulation data which is accumulated and divided by α.

| demodulation ROM2-1(for synchronization, p=0 block of ROM1 is arranged address incrementally) | | | | | | | | | |
|---|---|---|---|---|---|---|---|---|---|
| | *p* | 0 | | 1 | | 2 | | 3 | |
| | *r* | 1 | 2 | 1 | 2 | 1 | 2 | 1 | 2 |
| *q* | *j* | 1 | 2 | 3 | 4 | 5 | 6 | 7 | 8 |
| 0 | | 9D62 | 8CD2 | AC89 | 9C5E | 7AA0 | AF18 | 7BD9 | 85E0 |
| 1 | | 8CD2 | AC89 | 9C5E | 7AA0 | AF18 | 7BD9 | 85E0 | 9D62 |
| 2 | | AC89 | 9C5E | 7AA0 | AF18 | 7BD9 | 85E0 | 9D62 | 8CD2 |
| 3 | | 9C5E | 7AA0 | AF18 | 7BD9 | 85E0 | 9D62 | 8CD2 | AC89 |
| 4 | | 7AA0 | AF18 | 7BD9 | 85E0 | 9D62 | 8CD2 | AC89 | 9C5E |
| 5 | | AF18 | 7BD9 | 85E0 | 9D62 | 8CD2 | AC89 | 9C5E | 7AA0 |
| 6 | | 7BD9 | 85E0 | 9D62 | 8CD2 | AC89 | 9C5E | 7AA0 | AF18 |
| 7 | | 85E0 | 9D62 | 8CD2 | AC89 | 9C5E | 7AA0 | AF18 | 7BD9 |

| demodulation ROM2-2(for synchronization) | | | | | | | | | |
|---|---|---|---|---|---|---|---|---|---|
| | *p* | 0 | | 1 | | 2 | | 3 | |
| | *r* | 1 | 2 | 1 | 2 | 1 | 2 | 1 | 2 |
| *q* | *j* | 1 | 2 | 3 | 4 | 5 | 6 | 7 | 8 |
| 0 | | 97C8 | 97FB | 9FE6 | AA6B | 6DA9 | A655 | 7DB4 | 81E8 |
| 1 | | 97FB | 9FE6 | AA6B | 6DA9 | A655 | 7DB4 | 81E8 | 97C8 |
| 2 | | 9FE6 | AA6B | 6DA9 | A655 | 7DB4 | 81E8 | 97C8 | 97FB |
| 3 | | AA6B | 6DA9 | A655 | 7DB4 | 81E8 | 97C8 | 97FB | 9FE6 |
| 4 | | 6DA9 | A655 | 7DB4 | 81E8 | 97C8 | 97FB | 9FE6 | AA6B |
| 5 | | A655 | 7DB4 | 81E8 | 97C8 | 97FB | 9FE6 | AA6B | 6DA9 |
| 6 | | 7DB4 | 81E8 | 97C8 | 97FB | 9FE6 | AA6B | 6DA9 | A655 |
| 7 | | 81E8 | 97C8 | 97FB | 9FE6 | AA6B | 6DA9 | A655 | 7DB4 |

| demodulation ROM2-3(for synchronization) | | | | | | | | | |
|---|---|---|---|---|---|---|---|---|---|
| | *p* | 0 | | 1 | | 2 | | 3 | |
| | *r* | 1 | 2 | 1 | 2 | 1 | 2 | 1 | 2 |
| *q* | *j* | 1 | 2 | 3 | 4 | 5 | 6 | 7 | 8 |
| 0 | | 8C8B | 9D6B | 8E22 | B0DB | 650B | 9945 | 80A2 | 7EA6 |
| 1 | | 9D6B | 8E22 | B0DB | 650B | 9945 | 80A2 | 7EA6 | 8C8B |
| 2 | | 8E22 | B0DB | 650B | 9945 | 80A2 | 7EA6 | 8C8B | 9D6B |
| 3 | | B0DB | 650B | 9945 | 80A2 | 7EA6 | 8C8B | 9D6B | 8E22 |
| 4 | | 650B | 9945 | 80A2 | 7EA6 | 8C8B | 9D6B | 8E22 | B0DB |
| 5 | | 9945 | 80A2 | 7EA6 | 8C8B | 9D6B | 8E22 | B0DB | 650B |
| 6 | | 80A2 | 7EA6 | 8C8B | 9D6B | 8E22 | B0DB | 650B | 9945 |
| 7 | | 7EA6 | 8C8B | 9D6B | 8E22 | B0DB | 650B | 9945 | 80A2 |

| demodulation ROM2-4(for synchronization) | | | | | | | | | |
|---|---|---|---|---|---|---|---|---|---|
| | *p* | 0 | | 1 | | 2 | | 3 | |
| | *r* | 1 | 2 | 1 | 2 | 1 | 2 | 1 | 2 |
| *q* | *j* | 1 | 2 | 3 | 4 | 5 | 6 | 7 | 8 |
| 0 | | 8051 | 9AE3 | 7B6D | AE2A | 6216 | 89E8 | 8461 | 7C62 |
| 1 | | 9AE3 | 7B6D | AE2A | 6216 | 89E8 | 8461 | 7C62 | 8051 |
| 2 | | 7B6D | AE2A | 6216 | 89E8 | 8461 | 7C62 | 8051 | 9AE3 |
| 3 | | AE2A | 6216 | 89E8 | 8461 | 7C62 | 8051 | 9AE3 | 7B6D |
| 4 | | 6216 | 89E8 | 8461 | 7C62 | 8051 | 9AE3 | 7B6D | AE2A |
| 5 | | 89E8 | 8461 | 7C62 | 8051 | 9AE3 | 7B6D | AE2A | 6216 |
| 6 | | 8461 | 7C62 | 8051 | 9AE3 | 7B6D | AE2A | 6216 | 89E8 |
| 7 | | 7C62 | 8051 | 9AE3 | 7B6D | AE2A | 6216 | 89E8 | 8461 |

these four demodulation ROM are conbined to one by the method descrived in this example demodulation ROM2(combined ROM for synchronization)

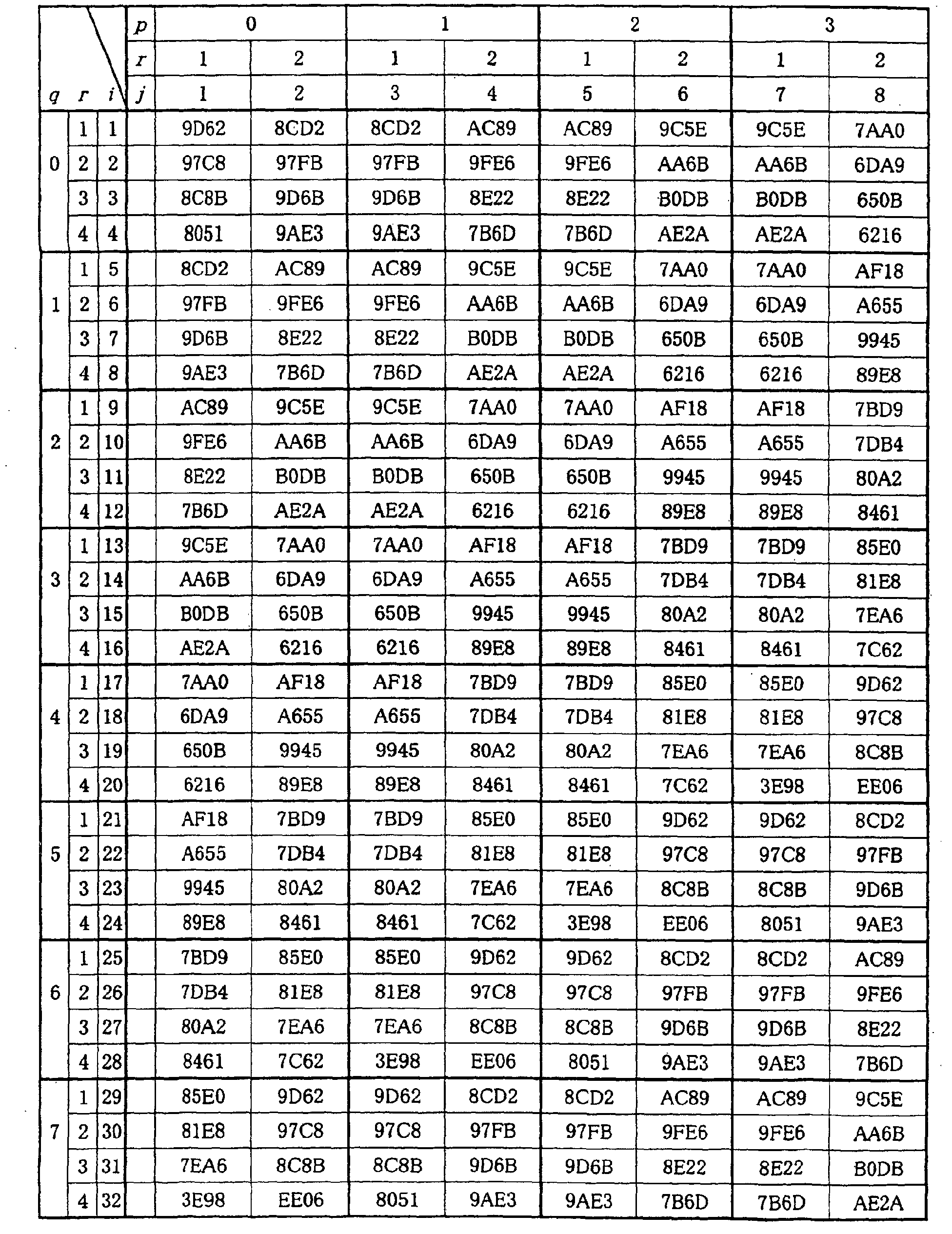

demodulation ROM2(combined ROM for synchronization)

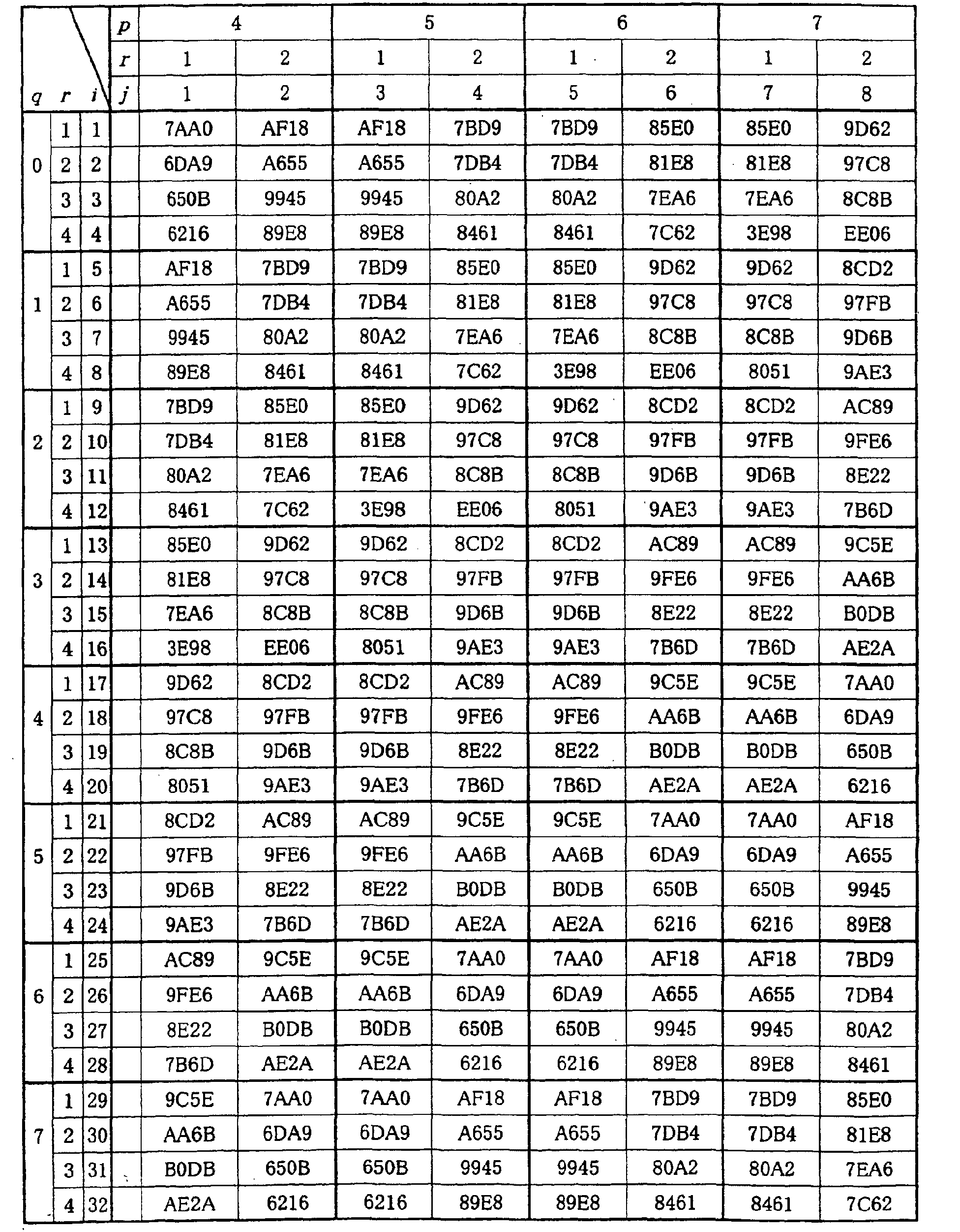

## Claims

1. The numbers of sub-carrier frequency are n, and by using proper positive integer α, modulation circuit is constructed, by 2n numbers of modulation ROM of which address are 2 a n, by 2n numbers of multiplier of 2n number of modulation data and data of modulation ROM as product, by accumulator summing together all data from multipliers, and by DA converter converting the data to analog from accumulator.
Demodulation circuit is constructed, by AD converter of which sampling frequency is same as DA converter, by 2n numbers of ROMl and 4n numbers of ROM2 of which address is 2 α n, by 2n numbers of multipliers by which the data from AD converter is multiplied with the data of each ROM1, by 2n numbers of accumulator by which the products of multiplier are accumulated and reset at every 2 α n data, by 4n numbers of multiplier by which the data from AD converter is multiplied with the data of each ROM2, by 4 α n numbers of accumulator by which the products of the multiplier are accumulated partially by α number and reset at every 2 α n data, and by the phase adjustment circuit using the accumulated data of cosine and sine wave of same sub-carrier frequency.
2n numbers of modulation Rom store the columns element data independently of modulation matrix of which elements are the value of trigonometric sine and cosine of sub-carrire frequencis in the address as sampling order. 2n number of demodulation ROMl, of which lines and columns are 2 a n and 2n, store the element data of combined matrix in α number position of inverse matrices which are made from the α numbers matrices of 2n lines and 2n columns picking up the line of modulation ROM according a number. 4n numbers of demodulation ROM2 store one pair of ROM1 belonging to sine and cosine of same sub-carrier frequency and store columns data which are shifted α number respectively to the end of this pair data of ROM1. 4 α n numbers of accumulated partially data by α number are adjusted about phase and are sent in accordance with shifting number to comparator and the address counter for demodulation is reset as the top of same data series near to α meets the data of the top of minimum shift number. Such system is claimed.

2. The modulation and demodulation system included in claim 1, of which sub-carrier frequency is determined so as to become minimum difference of the accumulated square value of the cosine data and the sine data picked up from modulation ROM by α interval of same sub-carrier frequency.

3. The modulation and demodulation system included in claim 1, of which synchronization circuit is different as following, of which every two series of modulation data are same and in specified trigonometric function in a sub-carrier for synchronization this is different from next series, of which demodulation ROM for synchronization is picked up from demodulation ROM1 responding synchronization sub-carrier for modulation and specified the address by continuous number being different from demodulation ROM address, of which data of demodulation ROM for synchronization is multiplied with AD converted data and accumulated for one round address number from every address as starting and send amount value at every time, and which have comparator comparing the amount value and next one find out difference for the synchronization signal.
